# EUROPÄISCHE PATENTSCHRIFT

(11) **EP 3 734 082 B1**
(45) Veröffentlichungstag und Bekanntmachung des Hinweises auf die Patenterteilung: **15.05.2024**
(21) Anmeldenummer: 20164176.8
(22) Anmeldetag: 19.03.2020
(51) Int. Cl.: F15B 11/02, F15B 11/036

(54) **HYDROSTATISCHES LINEAR-ANTRIEBSSYSTEM**
HYDROSTATIC LINEAR DRIVING SYSTEM
SYSTÈME D'ENTRAÎNEMENT LINÉAIRE HYDROSTATIQUE

(30) Priorität: 26.04.2019 DE 102019110917
(43) Veröffentlichungstag der Anmeldung: 04.11.2020
(73) Patentinhaber: Kautex Maschinenbau GmbH, 53229 Bonn (DE)
(72) Erfinder: Wellenberg, Arndt, 53773 Hennef (DE); Tschekorsky Orloff, Minka, 53121 Bonn (DE)
(74) Vertreter: ERNICKE Patent- und Rechtsanwälte PartmbB

(56) Entgegenhaltungen:
- DE-A1-102010 051 140
- DE-B3-102011 078 241
- JP-A- H0 319 811
- JP-A- 2002 206 507
- US-A1- 2008 155 975

## Beschreibung

Die Erfindung betrifft ein hydrostatisches Linear-Antriebssystem, insbesondere für eine Schließeinheit einer Blasformanlage.

Hydrostatische Linear-Antriebssysteme kommen darüber hinaus beispielsweise in Hydraulikpressen, Tiefzieh-oder Spritzgießmaschinen zum Einsatz. Derartige Maschinen weisen in der Regel mehrere Bewegungsabläufe auf. Einer dieser Bewegungsabläufe ist ein sogenannter Kraftgang, bei dem auf das zu bearbeitende Werkstück bzw. das zu bewegende Bauteil eine hohe Kraft bei niedriger Geschwindigkeit ausgeübt wird. Ein weiterer dieser Bewegungsabläufe ist ein sogenannter Eilgang, mit dem eine geringere Kraft ausgeübt wird, der aber eine schnellere Bewegung ermöglicht.

Ein derartiges Linear-Antriebssystem ist beispielsweise aus der DE 10 2016 113 882 A1 bekannt. Das bekannte Linear - Antriebssystem weist eine von einem Elektromotor angetriebene, strömungsrichtungsumkehrbare Hydraulikpumpe auf. Die Hydraulikpumpe dient zur Bereitstellung eines veränderbaren Volumenstroms einer Hydraulikflüssigkeit in einem geschlossenen Hydraulikkreislauf, der einen ersten Differentialzylinder als Hauptzylinder umfasst. Die ringförmige Kolbenfläche auf der Stangenseite des Differentialzylinders ist kleiner als die Kolbenfläche auf der Kolbenseite. Der geschlossene hydraulische Kreislauf ist gegenüber seiner Umgebung abgeschlossen und weist im Betrieb einen Überdruck gegenüber der Umgebung auf. Dieser Überdruck wird in an sich bekannter Weise mittels einer Vorspannquelle erzeugt. Um die unterschiedlichen Volumina des Differentialzylinders bei dessen Bewegung in Ein- und Ausfahrrichtung auszugleichen, benötigt das Antriebssystem einen Ausgleichsbehälter. Der Ausgleichsbehälter ist bevorzugt als zweiter Differentialzylinder ausgeführt, dessen Zylinderraum auf der Kolbenseite zur Umgebung geöffnet ist und dessen Ringfläche der Differenz zwischen der Kolbenfläche und der Ringfläche des Hauptzylinders entspricht. Die Kolbenstangen der beiden Differentialzylinder sind mechanisch gekoppelt. In der Verbindungsleitung zwischen dem Ringraum des als Ausgleichsbehälter arbeitenden zweiten Zylinders und dem Ringraum des Hauptzylinders ist ein 2/2-Wegeventil angeordnet. In einer weiteren Verbindungsleitung zwischen dem Ringraum des als Ausgleichsbehälter arbeitenden zweiten Zylinders und dem Kolbenraum des Hauptzylinders ist ein weiteres 2/2-Wegeventil angeordnet. Zum Ein-und Ausfahren des Hauptzylinders im Kraftgang wird das 2/2-Wegeventil zwischen den beiden Ringräumen der beiden Differentialzylinder geöffnet, während das weitere 2/2-Wegeventil gesperrt ist. Zum Ein-und Ausfahren des Hauptzylinders im Eilgang wird indes das 2/2-Wegeventil zwischen den beiden Ringräumen der Differentialzylinder gesperrt, während das weitere 2/2-Wegeventil geöffnet ist.

Der als Differentialzylinder ausgeführte Ausgleichsbehälter hat zur Folge, dass die Aus-und Einfahrbewegung des Hauptzylinders im Eilgang stets gegen den Widerstand des als Ausgleichsbehälter arbeitenden zweiten Zylinders erfolgt, wodurch hohe Verfahrgeschwindigkeiten im Eilgang bei zugleich großen Kräften im Kraftgang nicht realisiert werden können. Für den Betrieb des Antriebssystems im Eil-oder Kraftgang sind zudem zwingend zwei 2/2-Wegeventile erforderlich.

Die JP 46 14 544 B2 offenbart ein hydrostatisches Linear-Antriebssystem mit einem 3-Flächen-Zylinder, wobei eine hydraulisch wirksame Fläche für einen Kraftgang und zwei hydraulisch wirksame Flächen für einen Schnellgang vorgesehen sind. Das Ein- und Ausfahren des 3-Flächen-Zylinders im Eilgang erfolgt mittels der beiden hydraulisch wirksamen Flächen für den Schnellgang, die über einen geschlossenen hydraulischen Kreislauf umfassend eine Hydraulikpumpe wahlweise beaufschlagt werden können. Der der hydraulisch wirksamen Fläche für den Kraftgang zugeordnete Zylinderraum wird beim Ausfahren im Eilgang über einen vorgespannten Ausgleichsbehälter mit Fluid gefüllt. Im Kraftgang steht dieser Zylinderraum fluidleitend mit einer saugseitig mit einem Tank verbunden Pumpe und dem vorgespannten Ausgleichsbehälter in Verbindung. Zugleich wirkt der Druck des vorgespannten Ausgleichbehälters entgegen der Ausfahrrichtung auf eine der beiden hydraulisch wirksamen Flächen für den Schnellgang.

Die DE 10 2010 051 140 A1 offenbart ein Linear-Antriebssystem für eine Ziehpresse mit einem Pressenrahmen, in dem ein ein Oberwerkzeug tragender Stößel und ein Ziehkissen mit einer Ziehkissenplatte gelagert ist, an der sich ein Werkstückniederhalter abstützt. Die Ziehkissenplatte ist mit dem Stößel mechanisch über eine Verstrebung gekoppelt. Schnellgang-Zylinder sind zur beschleunigten Betätigung des Werkzeugniederhalters für dessen hydraulisch angetriebene Auf- und Abbewegung vorgesehen. Außerdem sind an der Ziehkissenplatte abgestützte, als Plunger ausgeführte Klemmzylinder vorgesehen; sie dienen zur Bewegung und Kraftbeaufschlagung des Werkstückniederhalters relativ zur Ziehkissenplatte. Die Kolben der Klemmzylinder und der Schnellgangzylinder sind gekoppelt. Für den Vorbeschleunigungsvorgang ist es vorgesehen, dass kurz vor dem Aufsetzen des Oberwerkzeugs auf den Niederhaltern die Schnellgang-Zylinder die Niederhalter sowie die Kolben der Klemmzylinder in Bewegungsrichtung des Stößels vorbeschleunigen. Die Klemmzylinderkammern sind dabei durch Sperrventile mit einem vorgespannten Niederdruckspeicher verbunden.

Aus US 2008 / 155975 ist ein hydraulisches System bekannt, das einen Aktuator mit drei Flüssigkeitskammern und genau eine Hochdruckpumpe umfasst. Bei einer Einfahrbewegung des Aktuators wird ein Fluidstrom zwischen zwei der Kammern über einen hydraulischen Motor geleitet, welcher zur Rückgewinnung von potenzieller Energie dient und die aufgenommene Energie an eine Energie-konsumierende Einrichtung weiterleitet.

Ausgehend von diesem Stand der Technik liegt der Erfindung die Aufgabe zugrunde, ein Linear-Antriebssystem zu schaffen, das einen einfacheren und kompakteren Aufbau bei zugleich höherer Ein-und Ausfahrgeschwindigkeit im Eilgang, höheren Kräften im Kraftgang sowie reduziertem Energieverbrauch aufweist.

Die Lösung dieser Aufgabe basiert auf dem Gedanken, die Ein-und Ausfahrbewegung im Eilgang mittels gesonderter hydraulisch wirksamer Flächen zu bewirken, die unabhängig von einer größeren hydraulisch wirksamen Fläche sind, die nur im Kraftgang mit unter Druck stehender Hydraulikflüssigkeit beaufschlagt wird. Die mechanischen und hydraulischen Widerstände werden dadurch reduziert, dass die größere hydraulisch wirksame Fläche im Eilgang nicht gegen eine unter Druck stehende Hydraulikflüssigkeit arbeitet, sondern die aus dem Zylinderraum zu verdrängende Hydraulikflüssigkeit einem gegenüber der Umgebung offenen, d.h. nicht vorgespannten Ausgleichsbehälter zugeführt bzw. die dem Zylinderraum zuzuführende Hydraulikflüssigkeit aus dem Ausgleichsbehälter nachgesaugt wird. Während der Ausfahrbewegung im Kraftgang wirken die hydraulisch wirksamen Flächen jedoch zusammen, was zu hohen Kräften bei einem kompakten Aufbau des Antriebssystems beiträgt.

Im Einzelnen wird die Aufgabe durch ein Linear-Antriebssystem mit den Merkmalen der unabhängigen Ansprüche 1 und 2 gelöst.

In der Ausführungsform nach Anspruch 1 wird das Ein-und Ausfahren der Zylinder im Eilgang ausschließlich durch den in den geschlossenen hydraulischen Kreislauf eingebundenen Gleichgangzylinder bewirkt. Im Eilgang wird eine Beaufschlagung der ersten hydraulisch wirksamen Fläche des einfach wirkenden Zylinders mit Hydraulikflüssigkeit unterbunden.

Das Ausfahren der Zylinder im Kraftgang wird in erster Linie durch den einfach wirkenden Zylinder bewirkt, dessen erste hydraulisch wirksame Fläche in Ausfahrrichtung mit der Hydraulikflüssigkeit beaufschlagt wird. Der einfach wirkende Zylinder wird beim Ausfahren durch den Gleichgangzylinder jedoch unterstützt, dessen zweite hydraulisch wirksame Fläche in Ausfahrrichtung ebenfalls mit Hydraulikflüssigkeit beaufschlagt wird. Die mechanische Kopplung zwischen dem einfach wirkenden Zylinder und dem Gleichgangzylinder erfolgt insbesondere über ein Koppelglied zwischen den Kolbenstangen der beiden Zylinder.

Eine weitere Reduktion der mechanischen Widerstände sowie des Energieverbrauchs wird dadurch erreicht, dass der einfach wirkende Zylinder ein Plungerzylinder, auch als Tauchkolbenzylinder bezeichnet, ist. Die Kolbenstange des Plungerzylinders dient zugleich als Kolben. Plungerzylinder weisen einen besseren mechanischen Wirkungsgrad als herkömmliche, einfach wirkende Zylinder auf.

Die Ausführungsform nach dem unabhängigen Anspruch 2 betrifft ein Linear-Antriebssystem mit einem Zylinder - nachfolgend auch als 3-Flächen-Zylinder bezeichnet -, der die hydraulisch wirksamen Flächen des einfach wirkenden Zylinders und des Gleichgangzylinders der Ausführungsform nach dem unabhängigen Anspruch 1 in einem Bauteil integriert und dadurch zu einer besonders kompakten Bauform beiträgt.

Das Ein-und Ausfahren des 3-Flächen-Zylinders im Eilgang wird, wie bei der Ausführungsform nach Anspruch 1, ausschließlich durch Beaufschlagen der zweiten oder dritten hydraulisch wirksamen Fläche mit Hydraulikflüssigkeit bewirkt. Im Eilgang wird eine Beaufschlagung der größeren ersten hydraulisch wirksamen Fläche unterbunden.

Das Ausfahren des 3-Flächen-Zylinders im Kraftgang wird in erster Linie durch Beaufschlagen der größeren, ersten hydraulisch wirksamen Fläche mit Hydraulikflüssigkeit bewirkt. Das Ausfahren wird jedoch, wie bei der Ausführungsform nach Anspruch 1, durch Beaufschlagen der zweiten hydraulisch wirksamen Fläche in Ausfahrrichtung unterstützt.

Der Niederdruckanschluss der zweiten Hydraulikpumpe ist fluidleitend mit dem Ausgleichsbehälter und der Hochdruckanschluss fluidleitend mit dem ersten Flüssigkeitsanschluss des einfach wirkenden Zylinders in der Ausführungsform nach Anspruch 1 bzw. mit dem ersten Flüssigkeitsanschluss des 3-Flächen-Zylinders nach Anspruch 2 verbunden.

Die fluidleitende Verbindung zwischen dem Hochdruckanschluss der zweiten Hydraulikpumpe und dem ersten Flüssigkeitsanschluss kann unmittelbar oder in einer Ausgestaltung der Erfindung nach den Merkmalen des Anspruchs 3 mittelbar erfolgen:
- Bei unmittelbarer fluidleitender Verbindung kann im Eilgang des Linear-Antriebssystems eine Beaufschlagung der ersten hydraulisch wirksamen Fläche durch bloße Deaktivierung der zweiten Hydraulikpumpe unterbunden werden. Ein Absperrorgan ist in dieser bevorzugten Ausführungsform nicht erforderlich, weil der Hochdruckanschluss der zweiten Hydraulikpumpe ausschließlich mit dem ersten Flüssigkeitsanschluss des einfach wirkenden Zylinders bzw. des 3-Flächenzylinders in fluidleitender Verbindung steht. Diese Ausführungsform trägt daher zum einfachen und kompakten Aufbau des Linear-Antriebssystems bei.
- In der Ausgestaltung der Erfindung nach Anspruch 3 ist der Hochdruckanschluss der zweiten Hydraulikpumpe mittelbar über den zweiten Druckanschluss der ersten Hydraulikpumpe fluidleitend mit dem ersten Flüssigkeitsanschluss verbunden. In einer derartigen Ausgestaltung der Erfindung ist ein Rückschlagventil in der fluidleitenden Verbindung zwischen der zweiten und ersten Hydraulikpumpe derart angeordnet, dass ein Rückfluss der Hydraulikflüssigkeit in Richtung der zweiten Hydraulikpumpe gesperrt ist. Zwischen dem ersten Druckanschluss der ersten Hydraulikpumpe und dem ersten Flüssigkeitsanschluss ist eine fluidleitende Verbindung mit einem zweiten Absperrorgan vorgesehen. Mit Hilfe des Absperrorgans wird im Eilgang des Linear-Antriebssystems eine Beaufschlagung der ersten hydraulisch wirksamen Fläche unterbunden. Im Kraftgang des Linear-Antriebssystems wird über das geöffnete Absperrorgan die erste hydraulisch wirksame Fläche mit Hydraulikflüssigkeit beaufschlagt.

In einer Ausgestaltung der Erfindung nach Anspruch 3 kann die zweite Hydraulikpumpe schwächer als die erste Hydraulikpumpe ausgelegt werden, da diese grundsätzlich nur das zusätzliche Volumen an Hydraulikflüssigkeit bereitstellen muss, während der Druckaufbau maßgeblich über die erste Hydraulikpumpe erfolgt. Selbstverständlich kann jedoch eine entsprechend stärker dimensionierte zweite Hydraulikpumpe in der Ausführungsform nach Anspruch 3 auch maßgeblich zum Druckaufbau im Kraftgang beitragen. Zusätzlich kann die zweite Hydraulikpumpe in der Ausführungsform nach Anspruch 3 Lecköl in dem geschlossenen hydraulischen Kreislauf ausgleichen sowie den geschlossenen hydraulischen Kreislauf vorspannen.

Um die Geschwindigkeit und Kraft des Linear-Antriebssystems im Kraft- oder Eilgang zu steuern, stellt die erste und/oder zweite Hydraulikpumpe in vorteilhafter Ausgestaltung der Erfindung einen veränderbaren Volumenstrom der Hydraulikflüssigkeit bereit. Hierzu kann gemäß den Merkmalen des Anspruchs 4 das Verdrängungsvolumen und/oder die Antriebsdrehzahl der ersten und/oder zweiten Hydraulikpumpe veränderlich sein.

Der Antrieb der Hydraulikpumpe erfolgt beispielsweise über einen Elektromotor, dessen Drehzahl und Drehrichtung veränderbar ist, um den Volumenstrom und die Strömungsrichtung zu verändern. Sofern der Antrieb über einen drehzahl-konstanten Elektromotor erfolgt kann das Verdrängungsvolumen der Hydraulikpumpe veränderlich sein, um den Volumenstrom zu ändern. Das Verdrängungsvolumen wird bei einer Verstellpumpe beispielsweise durch Verstellen einer Schrägscheibe stufenlos verändert. Bei Verstellung der Schrägscheibe durch die Nulllage ändert sich die Strömungsrichtung des Volumenstroms, so dass sich die Strömungsrichtung umkehrt und die Hochdruck- und Niederdruckseite der Verstellpumpe wechseln.

Ein besonders energiesparender Betrieb mit optimiertem Gesamtwirkungsgrad wird vorzugsweise mit einer Kombination aus veränderlicher Drehzahl des Elektromotors und veränderlichem Verdrängungsvolumen der Verstellpumpe erreicht.

In einer vorteilhaften Ausgestaltung der Erfindung sind die Druckanschlüsse der ersten und/oder der zweiten Hydraulikpumpe mit einem Druckspeicher verbunden. Die Verbindung zu den Anschlüssen erfolgt über Rückschlagventile, die einen Rückfluss von den Druckanschlüssen in Richtung des Druckspeichers verhindern. Die Rückschlagventile öffnen, wenn an den Druckanschlüssen ein geringerer Druck als in dem Druckbehälter herrscht. Durch den Druckspeicher kann daher die Dynamik des Linear-Antriebssystems verbessert und/oder Energie eingespart werden.

Sofern die Druckanschlüsse der ersten Hydraulikpumpe mit einem Druckspeicher verbunden sind, kann dieser zugleich als Vorspannquelle für den geschlossenen hydraulischen Kreislauf dienen. Die Vorspannung wird jedoch in erster Linie mittels einer Hydraulikpumpe erzeugt.

Der Vorspanndruck in dem geschlossenen hydraulischen Kreislauf ist höher als der Umgebungsdruck. Umgebungsdruck ist der hydrostatische Druck der Luft, der am Ort der Aufstellung des Linear-Antriebssystems herrscht. Der mittlere Luftdruck der Atmosphäre (atmosphärischer Druck) beträgt normgemäß etwa 1 bar. Der Vorspanndruck beträgt 5 - 50 bar, vorzugsweise zwischen 10 - 25 bar.

Die in den Hydraulikleitungen vorgesehenen Absperrorgane dienen dem Zweck, den Volumenstrom der Hydraulikflüssigkeit zu sperren oder freizugeben. Bei den Absperrorganen handelt es sich vorzugsweise um Sperrventile, insbesondere 2/2-Wegeventile. Das 2/2-Wegeventil besitzt zwei Anschlüsse und zwei Schaltstellungen. In der ersten, geschlossenen Schaltstellung ist der Durchfluss durch das 2/2-Wegeventil gesperrt, in der zweiten, geöffneten Schaltstellung ist der Durchfluss durch das 2/2-Wegeventil freigegeben.

Um in der Dekompressionsphase des einfach wirkenden Zylinders eine Beschädigung des Ausgleichsbehälters zu vermeiden, ist in einer vorteilhaften Ausgestaltung der Erfindung in der fluidleitenden Verbindung zwischen dem Ausgleichsbehälter und dem ersten Flüssigkeitsanschluss an dem einfach wirkenden Zylinder bzw. dem 3-Flächen Zylinder eine Drossel angeordnet. Durch die Drossel wird der Druck der durchfließenden Hydraulikflüssigkeit in der fluidleitenden Verbindung vermindert. Die Drossel kann als integraler Bestandteil des Sperrventils ausgeführt sein.

Nachfolgend wird die Erfindung anhand von Ausführungsbeispielen näher erläutert. Es zeigen
- **Figur 1**: eine erste Ausführungsform des hydrostatischen Linear-Antriebssystems mit einem einfach wirkenden Zylinder und einem Gleichgangzylinder,
- **Figur 1A**: während des Ausfahrens im Eilgang,
- **Figur 1B**: während des Ausfahrens Kraftgang,
- **Figur 1C**: während der Aufhebung der Kraft,
- **Figur 1D**: während des Einfahrens im Eilgang,
- **Figur 2**: eine zweite Ausführungsform des hydrostatischen Linear-Antriebssystems Absatz mit einem einfach wirkenden Zylinder und einem Gleichgangzylinder,
- **Figur 2A**: während des Ausfahrens im Eilgang,
- **Figur 2B**: während des Ausfahrens Kraftgang,
- **Figur 2C**: während der Aufhebung der Kraft,
- **Figur 2D**: während des Einfahrens im Eilgang,
- **Figur 3**: eine erste Ausführungsform des hydrostatischen Linear-Antriebssystems Absatz mit einem 3-Flächenzylinder,
- **Figur 3A**: während des Ausfahrens im Eilgang,
- **Figur 3B**: während des Ausfahrens Kraftgang,
- **Figur 3C**: während der Aufhebung der Kraft,
- **Figur 3D**: während des Einfahrens im Eilgang,
- **Figur 4**: eine zweite Ausführungsform des hydrostatischen Linear-Antriebssystems mit einem 3-Flächenzylinder
- **Figur 4A**: während des Ausfahrens im Eilgang,
- **Figur 4B**: während des Ausfahrens Kraftgang,
- **Figur 4C**: während der Aufhebung der Kraft und
- **Figur 4D**: während des Einfahrens im Eilgang.

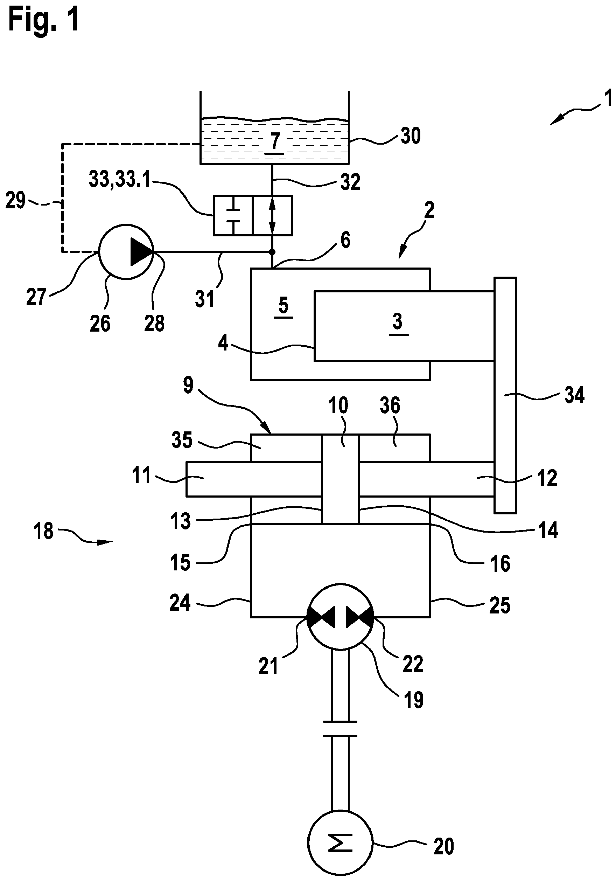

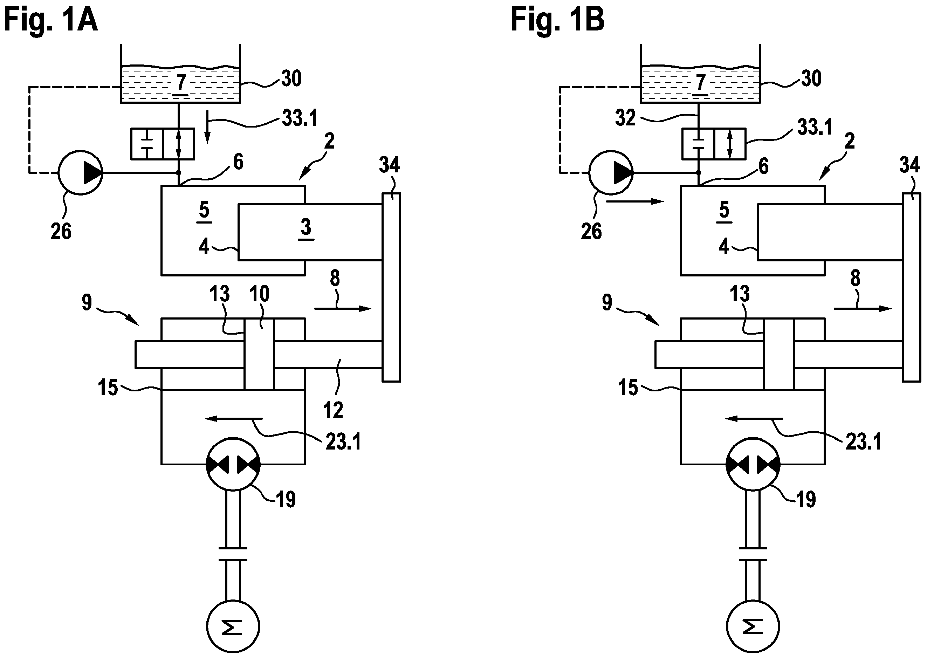

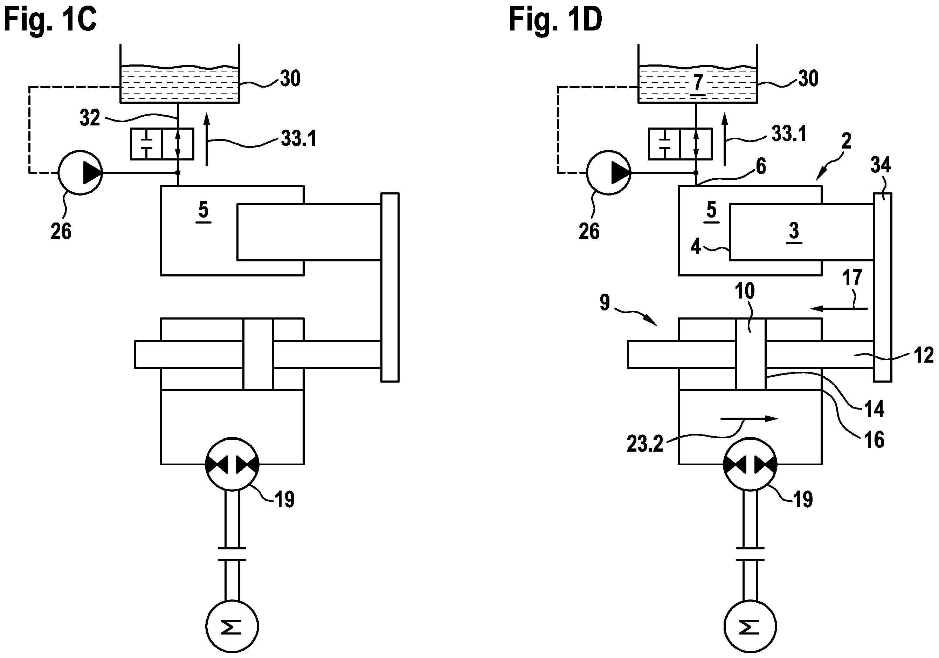

Figur 1 zeigt ein erstes Ausführungsbeispiel eines hydrostatischen Linear-Antriebssystem 1 mit einem einfach wirkenden Zylinder 2, der als Plungerzylinder ausgeführt ist. Der Plungerzylinder umfasst eine Kolbenstange 3, eine erste hydraulisch wirksame Fläche 4 und einen ersten Zylinderraum 5 mit einem ersten Flüssigkeitsanschluss 6 für eine Hydraulikflüssigkeit 7. Aufgrund der Ausführung des einfachwirkenden Zylinders 2 als Plungerzylinder ist die Kolbenstange 3 zugleich der Kolben. Die dem Zylinderraum 5 zugewandte Stirnseite der Kolbenstange 3 ist die Kolbenfläche und hydraulisch wirksam.

Über den ersten Flüssigkeitsanschluss 6 ist die erste hydraulisch wirksame Fläche 4 des einfach wirkenden Zylinders 2 in einer Ausfahrrichtung 8 mit der Hydraulikflüssigkeit 7 beaufschlagbar.

Das Linear-Antriebssystem 1 weist außerdem einen Gleichgangzylinder 9 auf, der auf beiden Seiten des Kolbens 10 eine Kolbenstange 11, 12 besitzt. Die ringförmigen Kolbenflächen, die die Kolbenstangen 11,12 umgeben, bilden eine zweite hydraulisch wirksame Fläche 13 und eine dritte hydraulisch wirksame Fläche 14, die in der Größe übereinstimmen. Der Gleichgangzylinder 9 weist einen zweiten Flüssigkeitsanschluss 15 und einen dritten Flüssigkeitsanschluss 16 auf, wobei der zweite Flüssigkeitsanschluss 15 in einem ringförmigen zweiten Zylinderraum 35 auf der linken Seite des Kolbens 10 und der dritte Flüssigkeitsanschluss 16 in einem dritten ringförmigen Zylinderraum 36 auf der rechten Seite des Kolbens 10 mündet.

Über den zweiten Flüssigkeitsanschluss 15 ist die zweite hydraulisch wirksame Fläche 13 in Ausfahrrichtung 8 mit Hydraulikflüssigkeit 7 beaufschlagbar. Über den dritten Flüssigkeitsanschluss 16 ist die dritte hydraulisch wirksame Fläche 14 in Einfahrrichtung 17 mit Hydraulikflüssigkeit 7 beaufschlagbar.

Ein unter einem Vorspannungsdruck stehender, geschlossener hydraulischer Kreislauf 18 umfasst den Gleichgangzylinder 9 und eine erste Hydraulikpumpe 19 mit einem ersten und einem zweiten Druckanschluss 21, 22. Ein Elektromotor 20 treibt die Hydraulikpumpe 19 mit konstanter oder variabler Motordrehzahl an. Bei der Hydraulikpumpe 19 handelt es sich vorzugsweise um eine Axialkolben-Verstellpumpe in Schrägscheiben-Bauart. Durch die Verstellung der Schrägscheibe kann der Volumenstrom der ersten Hydraulikpumpe 19 stufenlos verändert werden. Bei Verstellung der Schrägscheibe durch die Nulllage ändert sich die Strömungsrichtung 23.1, 23.2 des Volumenstroms. Die Verstellung des Schwenkwinkels erfolgt dabei hydraulisch über einen Stellkolben.

Abhängig von der Strömungsrichtung 23.1 / 23.2 ist der erste Druckanschluss 21 die Hochdruckseite und der zweite Druckanschluss 22 die Niederdruckseite der ersten Hydraulikpumpe 19 oder umgekehrt.

Der erste Druckanschluss 21 ist mit dem zweiten Flüssigkeitsanschluss 15 und der zweite Druckanschluss 22 mit dem dritten Flüssigkeitsanschluss 16 jeweils über eine Hydraulikleitung 24, 25 fluidleitend verbunden. Die Vorspannung der Hydraulikflüssigkeit in dem geschlossenen Hydraulikkreislauf 18 kann beispielsweise durch eine nicht dargestellte, an den Druckanschlüssen 21,22 angeschlossene Druckquelle erzeugt werden (z.B. Speiseölpumpe). Da das Vorspannen eines geschlossenen Hydraulikkreislaufes 18 dem Fachmann bekannt ist, wurde auf die Darstellung der hierfür erforderlichen Komponenten der Übersichtlichkeit halber verzichtet.

Zum Beaufschlagen der ersten hydraulisch wirksamen Fläche 4 des einfach wirkenden Zylinders 2 mit Hydraulikflüssigkeit 7 ist eine zweite Hydraulikpumpe 26 mit einem Niederdruckanschluss 27 und einem Hochdruckanschluss 28 vorgesehen. Der Niederdruckanschluss 27 ist fluidleitend über eine Hydraulikleitung 29 mit einem Ausgleichsbehälter 30 und der Hochdruckanschluss 28 ist fluidleitend über eine Hydraulikleitung 31 mit dem ersten Flüssigkeitsanschluss 6 des einfach wirkenden Zylinders 2 verbunden.

Der zur Umgebung hin offene Ausgleichsbehälter 30 nimmt Hydraulikflüssigkeit 7 auf und ist außerdem fluidleitend über eine Hydraulikleitung 32 mit dem ersten Flüssigkeitsanschluss 6 des einfach wirkenden Zylinders 2 verbunden. In der Hydraulikleitung 32 zwischen dem Ausgleichsbehälter 30 und dem einfach wirkenden Zylinder 2 ist ein 2/2-Wegeventil 33.1 als erstes Absperrorgan 33 angeordnet.

Schließlich sind die Kolbenstange 3 des einfach wirkenden Zylinders 2 und die Kolbenstange 12 des Gleichgangzylinders 9 mechanisch mittels eines Koppelgliedes 34 derart miteinander verbunden, dass sich beide Zylinder ausschließlich synchron bewegen.

Beim Ausfahren des Linear-Antriebssystems 1 nach Figur 1A im Eilgang wird die zweite hydraulisch wirksame Fläche 13 über den zweiten Flüssigkeitsanschluss 15 mittels der in Strömungsrichtung 23.1 arbeitenden ersten Hydraulikpumpe 19 mit Hydraulikflüssigkeit 7 beaufschlagt, wodurch sich der Kolben 10 des Gleichgangzylinders 9 in Ausfahrrichtung 8 bewegt. Die über das Koppelglied 34 mit der Kolbenstange 12 des Gleichgangzylinders 9 verbundene Kolbenstange 3 des einfach wirkenden Zylinders 2 wird ebenfalls in Ausfahrrichtung 8 bewegt, ohne dass deren hydraulisch wirksame Fläche 4 mit Hydraulikflüssigkeit 7 beaufschlagt wird. Die Hydraulikflüssigkeit 7 gelangt durch das geöffnete 2/2-Wegeventil 33.1 aus dem Ausgleichsbehälter 30 über den ersten Flüssigkeitsanschluss 6 in den Zylinderraum 5 des einfach wirkenden Zylinders 2 (Nachsaugung). Die ebenfalls an dem ersten Flüssigkeitsanschluss 6 angeschlossene zweite Hydraulikpumpe 26 ist nicht aktiv.

Beim Einfahren des Linear-Antriebssystems 1 nach Figur 1D im Eilgang wird die dritte hydraulisch wirksame Fläche 14 über den dritten Flüssigkeitsanschluss 16 mittels der nun in entgegengesetzter Strömungsrichtung 23.2 arbeitenden ersten Hydraulikpumpe 19 mit Hydraulikflüssigkeit 7 beaufschlagt, wodurch sich der Kolben 10 des Gleichgangzylinders 9 in Einfahrrichtung 17 bewegt. Die über das Koppelglied 34 mit der Kolbenstange 12 des Gleichgangzylinders 9 verbundene Kolbenstange 3 des einfach wirkenden Zylinders 2 wird ebenfalls in Einfahrrichtung 17 bewegt, ohne dass deren hydraulisch wirksame Fläche 4 mit Hydraulikflüssigkeit 7 beaufschlagt wird. Die Hydraulikflüssigkeit 7 wird durch das geöffnete 2/2-Wegeventil 33.1 aus dem Zylinderraum 5 des einfach wirkenden Zylinders 2 in den Ausgleichsbehälter 30 verdrängt. Die an dem ersten Flüssigkeitsanschluss 6 angeschlossene zweite Hydraulikpumpe 26 ist nicht aktiv.

Beim Ausfahren des Linear-Antriebssystems 1 im Kraftgang nach Figur 1B wird die erste hydraulisch wirksame Fläche 4 des einfach wirkenden Zylinders 2 über den ersten Flüssigkeitsanschluss 6 mittels der aktivierten zweiten Hydraulikpumpe 26 mit Hydraulikflüssigkeit 7 beaufschlagt, wodurch sich der einfach wirkende Zylinder 2 in Ausfahrrichtung 8 bewegt. Beim Ausfahren im Kraftgang ist außerdem die erste Hydraulikpumpe 19 in Strömungsrichtung 23.1 aktiviert, so dass über den zweiten Flüssigkeitsanschluss 15 die zweite hydraulisch wirksame Fläche 13 des Gleichgangzylinders 9 mit Hydraulikflüssigkeit 7 beaufschlagt wird. Der Gleichgangzylinder bewegt sich synchron mit dem einfachwirkenden Zylinder 2, mit dem er über das Koppelglied 34 gekoppelt ist, in Ausfahrrichtung 8. Eine Strömung der Hydraulikflüssigkeit 7 über die Hydraulikleitung 32 in den Ausgleichsbehälter 30 wird durch das geschlossene 2/2-Wegeventil 33.1 verhindert. Die beim Ausfahren im Kraftgang erzeugte Kraft wird durch das Zusammenwirken des einfach wirkenden Zylinders 2 und des in Ausfahrrichtung 8 beaufschlagten Gleichgangzylinders 9 erzeugt.

Zum Beenden des Kraftgangs werden entsprechend Figur 1C die erste Hydraulikpumpe 19 und die zweite Hydraulikpumpe 26 deaktiviert und das 2/2-Wegeventil 33.1 geöffnet, sodass die Hydraulikflüssigkeit 7 von dem ersten Zylinderraum 5 über das geöffnete 2/2 Wegeventil 33.1 in der Hydraulikleitung 32 in den Ausgleichsbehälter 30 strömen kann.

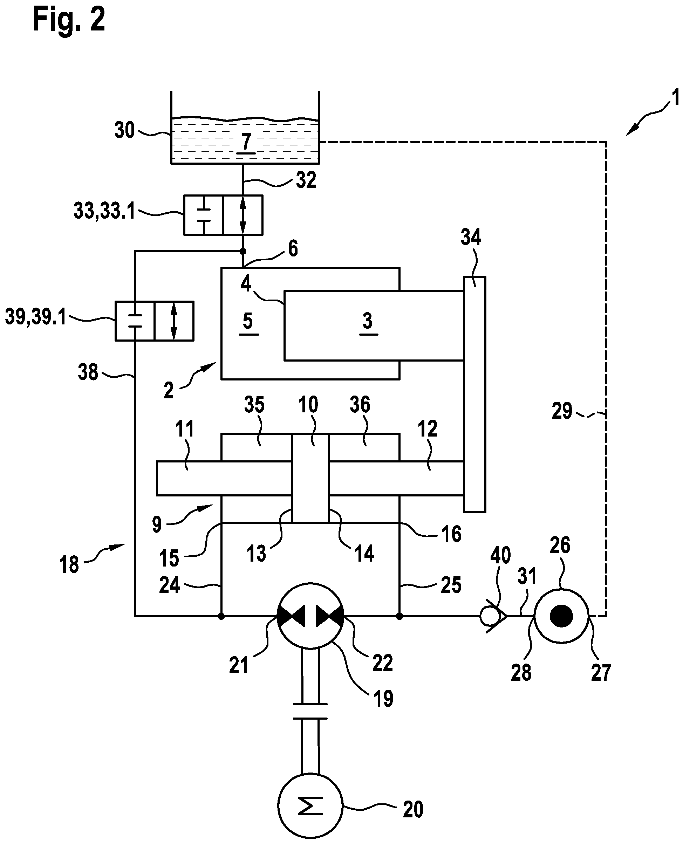

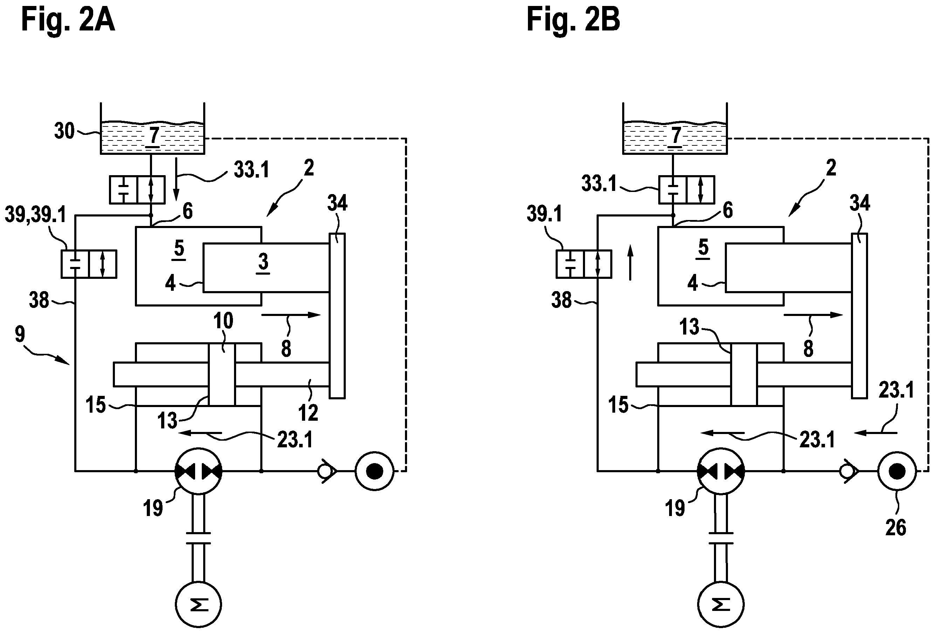

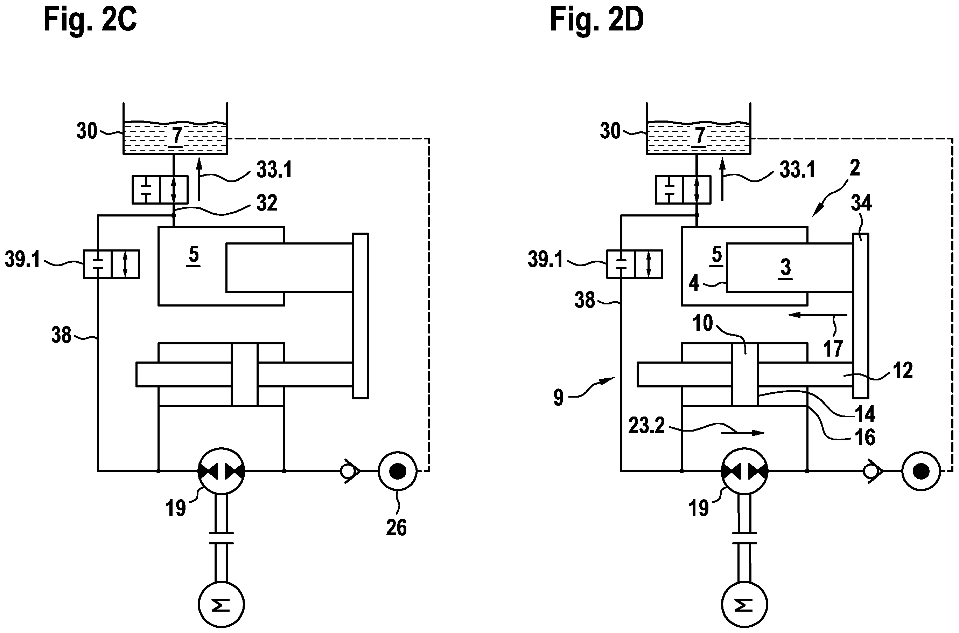

Figur 2 zeigt ein zweites Ausführungsbeispiel eines hydrostatischen Linear-Antriebssystem 1 mit einem einfach wirkenden Zylinder 2, der als Plungerzylinder ausgeführt ist. Der Plungerzylinder umfasst eine Kolbenstange 3, eine erste hydraulisch wirksame Fläche 4 und einen ersten Zylinderraum 5 mit einem ersten Flüssigkeitsanschluss 6 für eine Hydraulikflüssigkeit 7. Aufgrund der Ausführung des einfach wirkenden Zylinders 2 als Plungerzylinder ist die Kolbenstange 3 zugleich der Kolben. Die dem Zylinderraum 5 zugewandte Stirnseite der Kolbenstange 3 ist die Kolbenfläche und hydraulisch wirksam.

Über den ersten Flüssigkeitsanschluss 6 ist die erste hydraulisch wirksame Fläche 4 des einfach wirkenden Zylinders 2 in einer Ausfahrrichtung 8 mit der Hydraulikflüssigkeit 7 beaufschlagbar.

Das Linear-Antriebssystem 1 weist außerdem einen Gleichgangzylinder 9 auf, der auf beiden Seiten des Kolbens 10 eine Kolbenstange 11, 12 besitzt. Die ringförmigen Kolbenflächen, die die Kolbenstangen 11,12 umgeben, bilden eine zweite hydraulisch wirksame Fläche 13 und eine dritte hydraulisch wirksame Fläche 14, die in der Größe übereinstimmen. Der Gleichgangzylinder 9 weist einen zweiten Flüssigkeitsanschluss 15 und einen dritten Flüssigkeitsanschluss 16 auf, wobei der zweite Flüssigkeitsanschluss 15 in einem ringförmigen zweiten Zylinderraum 35 auf der linken Seite des Kolbens 10 und der dritte Flüssigkeitsanschluss 16 in einem dritten ringförmigen Zylinderraum 36 auf der rechten Seite des Kolbens 10 mündet.

Über den zweiten Flüssigkeitsanschluss 15 ist die zweite hydraulisch wirksame Fläche 13 in Ausfahrrichtung 8 mit Hydraulikflüssigkeit 7 beaufschlagbar. Über den dritten Flüssigkeitsanschluss 16 ist die dritte hydraulisch wirksame Fläche 14 in Einfahrrichtung 17 mit Hydraulikflüssigkeit 7 beaufschlagbar.

Ein unter einem Vorspannungsdruck stehender, geschlossener hydraulischer Kreislauf 18 umfasst den Gleichgangzylinder 9 und eine erste Hydraulikpumpe 19 mit einem ersten und einem zweiten Druckanschluss 21, 22. Ein Elektromotor 20 treibt die Hydraulikpumpe 19 mit konstanter oder variabler Motordrehzahl an. Bei der Hydraulikpumpe 19 handelt es sich vorzugsweise um eine Axialkolben-Verstellpumpe in Schrägscheiben-Bauart wie bei der Ausführungsform nach Figur 1.

Der erste Druckanschluss 21 ist mit dem zweiten Flüssigkeitsanschluss 15 und der zweite Druckanschluss 22 mit dem dritten Flüssigkeitsanschluss 16 jeweils über eine Hydraulikleitung 24, 25 fluidleitend verbunden. Die Vorspannung der Hydraulikflüssigkeit in dem geschlossenen Hydraulikkreislauf 18 kann beispielsweise durch eine nicht dargestellte, an die Druckanschlüsse 21,22 angeschlossene Druckquelle erzeugt werden.

Zum Beaufschlagen der ersten hydraulisch wirksamen Fläche 4 des einfach wirkenden Zylinders 2 mit Hydraulikflüssigkeit 7 ist der erste Flüssigkeitsanschluss 6 des einfach wirkenden Zylinders 2 über eine Hydraulikleitung 38 fluidleitend mit dem ersten Druckanschluss 21 der ersten Hydraulikpumpe 19 verbunden. In der Hydraulikleitung 38 ist ein zweites Absperrorgan 39 angeordnet, das als 2/2-Wegeventil 39.1 ausgeführt ist. Ein Hochdruckanschluss 28 einer zweiten Hydraulikpumpe 26 ist über eine Hydraulikleitung 31 fluidleitend mit dem zweiten Druckanschluss 22 der ersten Hydraulikpumpe 19 verbunden. Ein Rückschlagventil 40 in der Hydraulikleitung 31 verhindert einen Rückfluss der Hydraulikflüssigkeit 7 in Richtung der zweiten Hydraulikpumpe 26.

Ein Niederdruckanschluss 27 der zweiten Hydraulikpumpe 26 ist fluidleitend über eine Hydraulikleitung 29 mit dem Ausgleichsbehälter 30 verbunden. Abweichend zu der Ausführungsform nach Figur 1 ist der Hochdruckanschluss 28 der zweiten Hydraulikpumpe 26 jedoch nicht unmittelbar fluidleitend mit dem ersten Flüssigkeitsanschluss 6 des einfach wirkenden Zylinders 2 verbunden, sondern mittelbar über den durch das geöffnete 2/2-Wegeventil 39.1 und die in Strömungsrichtung 23.1 aktivierte erste Hydraulikpumpe 19 freigegebenen Strömungsweg.

Der zur Umgebung hin offene Ausgleichsbehälter 30 nimmt Hydraulikflüssigkeit 7 auf und ist außerdem fluidleitend über eine Hydraulikleitung 32 mit dem ersten Flüssigkeitsanschluss 6 des einfach wirkenden Zylinders 2 verbunden. In der Hydraulikleitung 32 zwischen dem Ausgleichsbehälter 30 und dem einfach wirkenden Zylinder 2 ist ein 2/2-Wegeventil 33.1 als erstes Absperrorgan 33 angeordnet.

Schließlich sind die Kolbenstange 3 des einfach wirkenden Zylinders 2 und die Kolbenstange 12 des Gleichgangzylinders 9 mechanisch mittels eines Koppelgliedes 34 derart miteinander verbunden, dass sich beide Zylinder ausschließlich synchron bewegen.

Beim Ausfahren des Linear-Antriebssystems 1 im Eilgang nach Figur 2A wird die zweite hydraulisch wirksame Fläche 13 über den zweiten Flüssigkeitsanschluss 15 mittels der in Strömungsrichtung 23.1 arbeitenden ersten Hydraulikpumpe 19 mit Hydraulikflüssigkeit 7 beaufschlagt, wodurch sich der Kolben 10 des Gleichgangzylinders 9 in Ausfahrrichtung 8 bewegt. Die über das Koppelglied 34 mit der Kolbenstange 12 des Gleichgangzylinders 9 verbundene Kolbenstange 3 des einfach wirkenden Zylinders 2 wird ebenfalls in Ausfahrrichtung 8 bewegt, ohne dass deren hydraulisch wirksame Fläche 4 mit Hydraulikflüssigkeit 7 beaufschlagt wird. Die Hydraulikflüssigkeit 7 gelangt durch das geöffnete 2/2-Wegeventil 33.1 aus dem Ausgleichsbehälter 30 über den ersten Flüssigkeitsanschluss 6 in den Zylinderraum 5 des einfach wirkenden Zylinders 2 (Nachsaugung). Eine Beaufschlagung der ersten hydraulisch wirksamen Fläche 4 des einfach wirkenden Zylinders 2 erfolgt nicht, weil das 2/2-Wegeventil 39.1 in der Hydraulikleitung 38 geschlossen ist.

Beim Einfahren des Linear-Antriebssystems 1 im Eilgang nach Figur 2D wird die dritte hydraulisch wirksame Fläche 14 über den dritten Flüssigkeitsanschluss 16 mittels der nun in entgegengesetzter Strömungsrichtung 23.2 arbeitenden ersten Hydraulikpumpe 19 mit Hydraulikflüssigkeit 7 beaufschlagt, wodurch sich der Kolben 10 des Gleichgangzylinders 9 in Einfahrrichtung 17 bewegt. Die über das Koppelglied 34 mit der Kolbenstange 12 des Gleichgangzylinders 9 verbundene Kolbenstange 3 des einfach wirkenden Zylinders 2 wird ebenfalls in Einfahrrichtung 17 bewegt, ohne dass deren hydraulisch wirksame Fläche 4 mit Hydraulikflüssigkeit 7 beaufschlagt wird. Die Hydraulikflüssigkeit 7 wird durch das geöffnete 2/2-Wegeventil 33.1 aus dem Zylinderraum 5 des einfach wirkenden Zylinders 2 in den Ausgleichsbehälter 30 verdrängt. Das 2/2-Wegeventil 39.1 in der Hydraulikleitung 38 ist geschlossen.

Beim Ausfahren des Linear-Antriebssystems 1 im Kraftgang nach Figur 2B wird die erste hydraulisch wirksame Fläche 4 des einfach wirkenden Zylinders 2 über den ersten Flüssigkeitsanschluss 6 mit Hydraulikflüssigkeit 7 beaufschlagt, wodurch sich der einfach wirkende Zylinder 2 in Ausfahrrichtung 8 bewegt. Das 2/2-Wegeventil 39.1 in der Hydraulikleitung 38 ist nun geöffnet. Sowohl die erste Hydraulikpumpe 19 als auch die zweite Hydraulikpumpe 26 sind aktiviert und fördern die Hydraulikflüssigkeit 7 in übereinstimmender Strömungsrichtung 23.1 in Richtung des ersten Flüssigkeitsanschlusses 6 des einfach wirkenden Zylinders 2. Die aktivierte zweite Hydraulikpumpe 26 stellt das erforderliche zusätzliche Volumen an Hydraulikflüssigkeit 7 aus dem Ausgleichsbehälter 30 bereit, um über den ersten Flüssigkeitsanschluss 6 die erste hydraulisch wirksame Fläche 4 des einfach wirkenden Zylinders 2 und über den zweiten Flüssigkeitsanschluss 15 außerdem die zweite hydraulisch wirksame Fläche 13 des Gleichgangzylinders 9 mit Hydraulikflüssigkeit 7 zu beaufschlagen. Der Gleichgangzylinder 9 bewegt sich synchron mit dem einfach wirkenden Zylinder 2, mit dem er über das Koppelglied 34 gekoppelt ist, in Ausfahrrichtung 8. Eine Strömung der Hydraulikflüssigkeit 7 über die Hydraulikleitung 32 in den Ausgleichsbehälter 30 wird durch das geschlossene 2/2-Wegeventil 33.1 verhindert.

Zum Beenden des Kraftgangs werden entsprechend Figur 2C die erste Hydraulikpumpe 19 und die zweite Hydraulikpumpe 26 deaktiviert, das 2/2-Wegeventil 33.1 geöffnet und das 2/2-Wegeventil 39.1 in der Hydraulikleitung 38 geschlossen, so dass die Hydraulikflüssigkeit 7 von dem ersten Zylinderraum 5 über das geöffnete 2/2 Wegeventil 33.1 in der Hydraulikleitung 32 in den Ausgleichsbehälter 30 strömt.

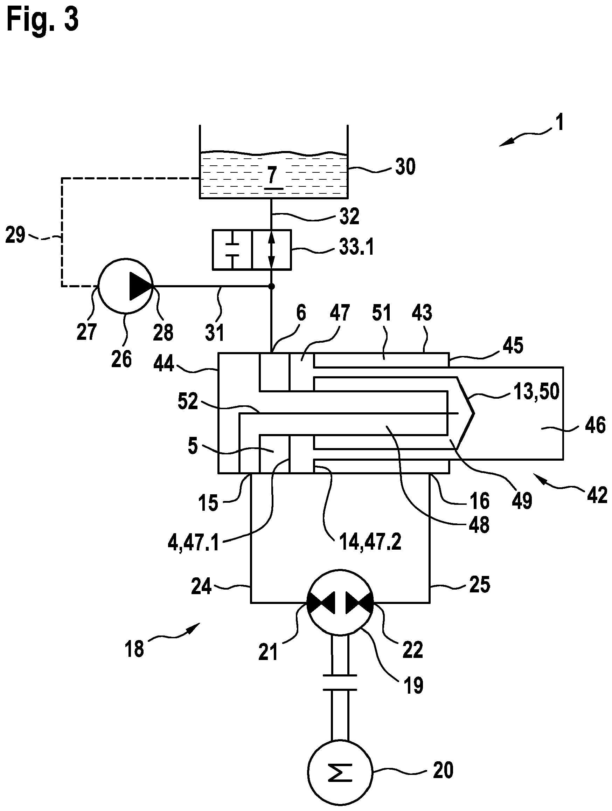

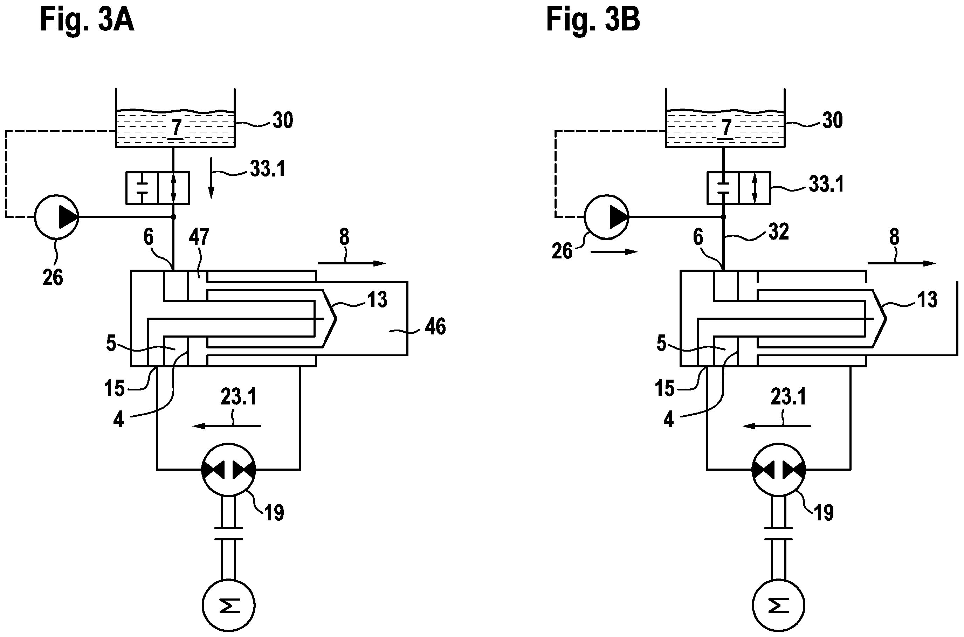

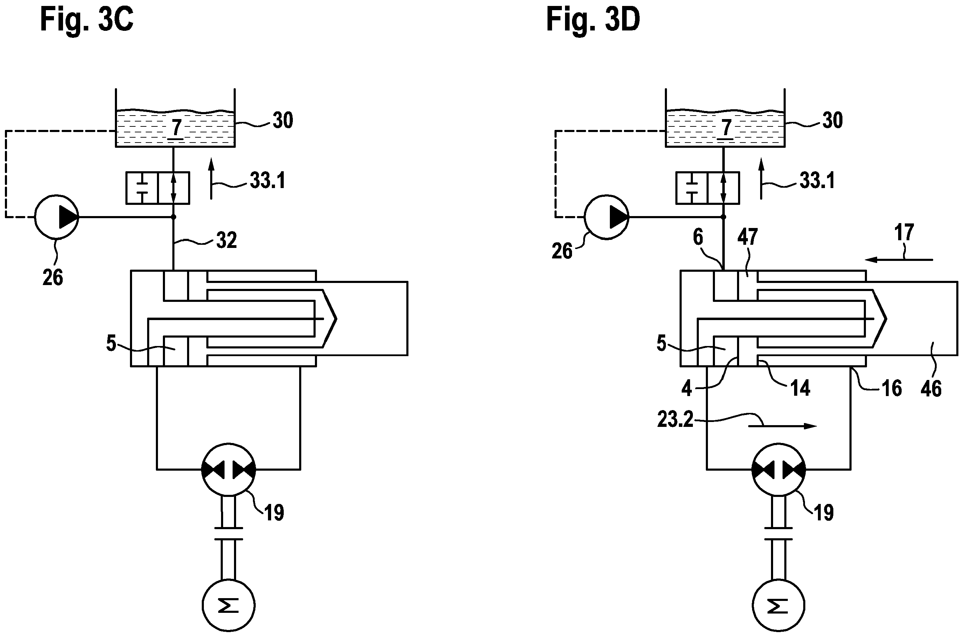

Figur 3 zeigt ein drittes Ausführungsbeispiel eines hydrostatischen Linear-Antriebssystem 1 mit einem 3-Flächenzylinder 42, der die Funktionen des einfach wirkenden Zylinders 2 sowie des Gleichgangzylinders 9 der Ausführungsformen nach Figuren 1 und 2 in einer Baugruppe integriert. Funktional mit den Ausführungsformen nach Figuren 1 und 2 übereinstimmende Bauteile des 3-Flächenzylinders 42 sind mit übereinstimmenden Bezugszeichen versehen. Der 3-Flächenzylinder 42 weist ein Zylinderrohr 43, einen das Zylinderrohr 43 an einer Stirnseite abschließenden Zylinderboden 44 sowie eine an der gegenüberliegenden Stirnseite angeordnete Kolbenstangenführung 45 auf. Die Kolbenstangenführung 45 führt eine Kolbenstange 46 in axialer Richtung. An einem Ende der Kolbenstange 46 ist ein ringförmiger Kolben 47 angeordnet. Von dem Zylinderboden 44 erstreckt sich in das Zylinderrohr 43 hinein ein Führungszapfen 48. Der ringförmige Kolben 47 umgibt den Führungszapfen 48 und ist gleitend entlang des Führungszapfens 48 in einer Ausfahrrichtung 8 und einer Einfahrrichtung 17 geführt.

Die Kolbenstange 46 weist einen Hohlraum 49 in Form eines Sacklochs auf, der sich ausgehend von dem zentralen Durchgang in dem ringförmigen Kolben 47 in die Kolbenstange 46 hinein erstreckt und den Führungszapfen 48 umgibt.

Der 3-Flächenzylinder weist drei hydraulisch wirksame Flächen 4, 13, 14 auf. Die erste hydraulisch wirksame Fläche 4 wird von der dem Zylinderboden 44 zugewandten ersten ringförmigen Kolbenfläche 47.1 gebildet und begrenzt einen ersten ringförmigen Zylinderraum 5.

Die zweite hydraulisch wirksame Fläche 13 wird von einer Teiloberfläche 50 des Hohlraums 49 gebildet, die der Stirnseite des Führungszapfens 48 gegenüberliegt.

Die dritte hydraulisch wirksame Fläche 14 wird von der der Kolbenstangenführung 45 zugewandten zweiten ringförmigen Kolbenfläche 47.2 gebildet.

Ein zweiter ringförmiger Zylinderraum 51 wird durch die ringförmige Kolbenfläche 47.2, den Mantel der Kolbenstange 46, die Innenfläche des Zylinderrohrs 43 sowie stirnseitig durch die Kolbenstangenführung 45 gebildet.

Die zweite und dritte hydraulisch wirksame Fläche 13, 14 stimmen in der Größe überein.

Der erste Zylinderraum 5 verfügt über einen ersten Flüssigkeitsanschluss 6, über den die erste hydraulisch wirksame Fläche 4 in Ausfahrrichtung 8 des 3-Flächen-Zylinders 42 mit einer Hydraulikflüssigkeit 7 beaufschlagbar ist.

Die zweite hydraulisch wirksame Fläche 13 ist über einen zweiten Flüssigkeitsanschluss 15 in Ausfahrrichtung 8 mit der Hydraulikflüssigkeit 7 beaufschlagbar. Der zweite Flüssigkeitsanschluss 15 befindet sich am Zylinderboden 44. Von dort gelangt die Hydraulikflüssigkeit 7 über einen Fluidkanal 52 zu einer an der Stirnseite des Führungszapfens 48 angeordneten Austrittsöffnung.

Die dritte hydraulisch wirksame Fläche 14 ist über den dritten Flüssigkeitsanschluss 16 mit der Hydraulikflüssigkeit 7 in einer Einfahrrichtung 17 beaufschlagbar. Der dritte Flüssigkeitsanschluss 16 mündet in dem zweiten ringförmigen Zylinderraum 51.

Über den ersten Flüssigkeitsanschluss 6 ist die erste hydraulisch wirksame Fläche 4 in Ausfahrrichtung 8 mit der Hydraulikflüssigkeit 7 beaufschlagbar.

Über den zweiten Flüssigkeitsanschluss 15 ist die zweite hydraulisch wirksame Fläche 13 in Ausfahrrichtung 8 mit Hydraulikflüssigkeit 7 beaufschlagbar.

Über den dritten Flüssigkeitsanschluss 16 ist die dritte hydraulisch wirksame Fläche 14 in Einfahrrichtung 17 mit Hydraulikflüssigkeit 7 beaufschlagbar.

Ein unter einem Vorspannungsdruck stehender, geschlossener hydraulischer Kreislauf 18 umfasst die erste Hydraulikpumpe 19, wobei der erste Druckanschluss 21 mit dem zweiten Flüssigkeitsanschluss 15 über die Hydraulikleitung 24 und der zweite Druckanschluss 22 über die Hydraulikleitung 25 mit dem dritten Flüssigkeitsanschluss 16 fluidleitend verbunden sind.

Ein Elektromotor 20 treibt die erste Hydraulikpumpe 19 mit konstanter oder variabler Motordrehzahl an. Bei der Hydraulikpumpe 19 handelt es sich vorzugsweise um eine Axialkolben-Verstellpumpe in Schrägscheiben-Bauart. Durch die Verstellung der Schrägscheibe kann der Volumenstrom der ersten Hydraulikpumpe stufenlos verändert und umgekehrt werden.

Die Vorspannung der Hydraulikflüssigkeit in dem geschlossenen Hydraulikkreislauf 18 kann beispielsweise durch einen nicht dargestellten, an den Druckanschlüssen 21,22 angeschlossenen Druckbehälter oder über eine externe Hydraulikpumpe erzeugt werden.

Zum Beaufschlagen der ersten hydraulisch wirksamen Fläche 4 des 3-Flächenzylinders 42 mit Hydraulikflüssigkeit 7 ist eine zweite Hydraulikpumpe 26 mit einem Niederdruckanschluss 27 und einem Hochdruckanschluss 28 vorgesehen. Der Niederdruckanschluss 27 ist fluidleitend über eine Hydraulikleitung 29 mit einem Ausgleichsbehälter 30 und der Hochdruckanschluss 28 ist fluidleitend über eine Hydraulikleitung 31 mit dem ersten Flüssigkeitsanschluss 6 verbunden.

Der zur Umgebung hin offene Ausgleichsbehälter 30 nimmt Hydraulikflüssigkeit 7 auf und ist außerdem fluidleitend über eine Hydraulikleitung 32 mit dem ersten Flüssigkeitsanschluss 6 des 3-Flächenzylinders 42 verbunden. In der Hydraulikleitung 32 zwischen dem Ausgleichsbehälter 30 und dem ersten Flüssigkeitsanschluss 6 ist ein 2/2-Wegeventil 33.1 als erstes Absperrorgan 33 angeordnet.

Beim Ausfahren des Linear-Antriebssystems 1 im Eilgang nach Figur 3A wird die zweite hydraulisch wirksame Fläche 13 über den zweiten Flüssigkeitsanschluss 15 mittels der in Strömungsrichtung 23.1 arbeitenden ersten Hydraulikpumpe 19 mit Hydraulikflüssigkeit 7 beaufschlagt, wodurch sich der ringförmige Kolben 47 mit der Kolbenstange 46 in Ausfahrrichtung 8 bewegt. Die hydraulisch wirksame Fläche 4 wird im Eilgang nicht mit Hydraulikflüssigkeit 7 beaufschlagt. Die Hydraulikflüssigkeit 7 gelangt durch das geöffnete 2/2-Wegeventil 33.1 aus dem Ausgleichsbehälter 30 über den ersten Flüssigkeitsanschluss 6 in den ersten Zylinderraum 5 des 3-Flächenzylinders 42 (Nachsaugung). Die ebenfalls an dem ersten Flüssigkeitsanschluss 6 angeschlossene zweite Hydraulikpumpe 26 ist nicht aktiv.

Beim Einfahren des Linear-Antriebssystems 1 im Eilgang nach Figur 3D wird die dritte hydraulisch wirksame Fläche 14 über den dritten Flüssigkeitsanschluss 16 mittels der nun in entgegengesetzter Strömungsrichtung 23.2 arbeitenden ersten Hydraulikpumpe 19 mit Hydraulikflüssigkeit 7 beaufschlagt, wodurch sich der ringförmige Kolben 47 mit der Kolbenstange 46 in Einfahrrichtung 17 bewegt. Die hydraulisch wirksame Fläche 4 wird nicht mit Hydraulikflüssigkeit 7 beaufschlagt. Die Hydraulikflüssigkeit 7 wird durch das geöffnete 2/2-Wegeventil 33.1 aus dem Zylinderraum 5 des ersten Zylinderraums 5 in den Ausgleichsbehälter 30 verdrängt. Die an dem ersten Flüssigkeitsanschluss 6 angeschlossene zweite Hydraulikpumpe 26 ist nicht aktiv.

Beim Ausfahren des Linear-Antriebssystems 1 im Kraftgang nach Figur 3B wird die erste hydraulisch wirksame Fläche 4 des 3-Flächenzylinders 42 über den ersten Flüssigkeitsanschluss 6 mittels der aktivierten zweiten Hydraulikpumpe 26 mit Hydraulikflüssigkeit 7 beaufschlagt, wodurch sich der 3-Flächenzylinder 42 in Ausfahrrichtung 8 bewegt. Beim Ausfahren im Kraftgang ist außerdem die erste Hydraulikpumpe 19 in Strömungsrichtung 23.1 aktiviert, so dass über den zweiten Flüssigkeitsanschluss 15 die zweite hydraulisch wirksame Fläche 13 mit Hydraulikflüssigkeit 7 beaufschlagt wird. Eine Strömung der Hydraulikflüssigkeit 7 aus dem ersten Zylinderraum 5 über die Hydraulikleitung 32 in den Ausgleichsbehälter 30 wird durch das geschlossene 2/2-Wegeventil 33.1 verhindert. Die beim Ausfahren im Kraftgang erzeugte Kraft wird durch das Zusammenwirken der größeren ersten hydraulisch wirksamen Fläche 4 sowie der kleineren zweiten hydraulisch wirksamen Fläche 13 erzeugt.

Zum Beenden des Kraftgangs werden entsprechend Figur 3C die erste Hydraulikpumpe 19 und die zweite Hydraulikpumpe 26 deaktiviert und das 2/2-Wegeventil 33.1 geöffnet, sodass die Hydraulikflüssigkeit 7 von dem ersten Zylinderraum 5 über das geöffnete 2/2 Wegeventil 33.1 in der Hydraulikleitung 32 in den Ausgleichsbehälter 30 strömen kann.

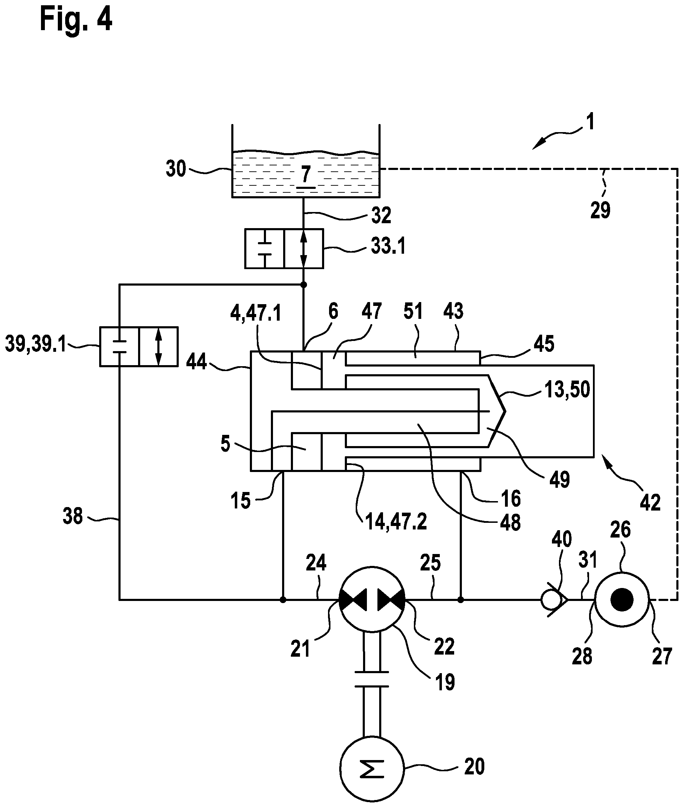

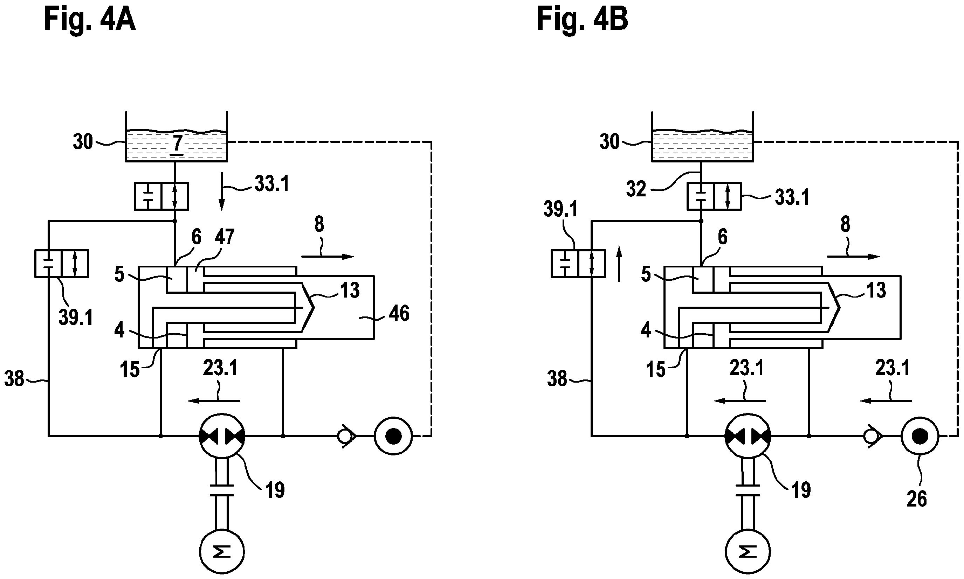

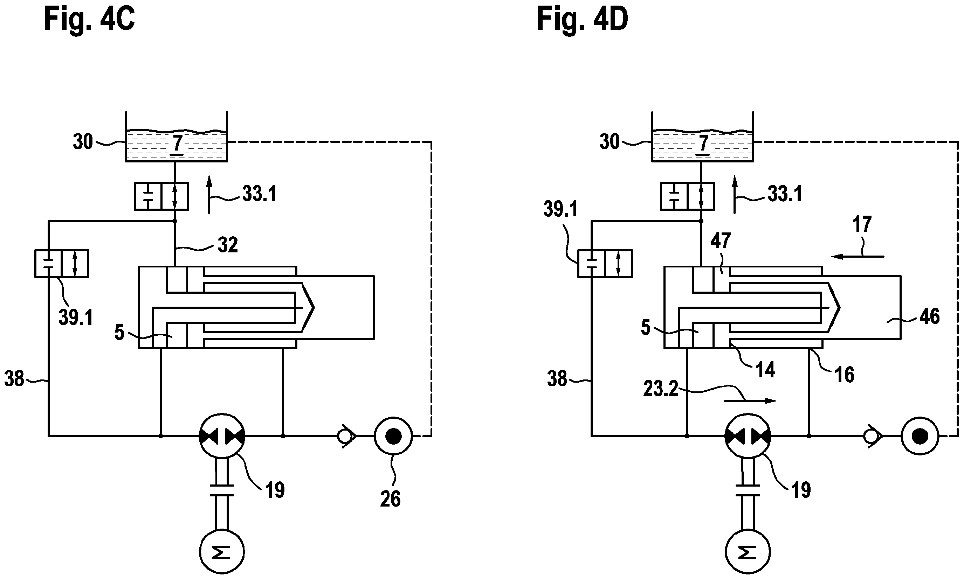

Figur 4 zeigt ein viertes Ausführungsbeispiel eines hydrostatischen Linear-Antriebssystem 1 mit einem 3-Flächenzylinder 42, der die Funktionen des einfach wirkenden Zylinders 2 sowie des Gleichgangzylinders 9 der Ausführungsformen nach Figuren 1 und 2 in einer Baugruppe integriert. Der 3-Flächenzlinder 42 ist entsprechend dem 3-Flächenzylinder 42 des dritten Ausführungsbeispiels aufgebaut, so dass zur Vermeidung von Wiederholungen auf die Erläuterungen der Figur 3 verwiesen wird. Unterschiede ergeben sich hinsichtlich der hydraulischen Versorgung des 3-Flächenzylinders 42, die nachfolgend näher erläutert werden. Die Unterschiede entsprechen den Unterschieden des zweiten Ausführungsbeispiels gegenüber dem ersten Ausführungsbeispiel.

Zum Beaufschlagen der ersten hydraulisch wirksamen Fläche 4 mit Hydraulikflüssigkeit 7 ist der erste Flüssigkeitsanschluss 6 des 3-Flächenzylinders 42 über eine Hydraulikleitung 38 fluidleitend mit dem ersten Druckanschluss 21 der ersten Hydraulikpumpe 19 verbunden. In der Hydraulikleitung 38 ist ein zweites Absperrorgan 39 angeordnet, das als 2/2-Wegeventil 39.1 ausgeführt ist. Ein Hochdruckanschluss 28 einer zweiten Hydraulikpumpe 26 ist über eine Hydraulikleitung 31 fluidleitend mit dem zweiten Druckanschluss 22 der ersten Hydraulikpumpe 19 verbunden. Ein Rückschlagventil 40 in der Hydraulikleitung 31 verhindert einen Rückfluss der Hydraulikflüssigkeit 7 in Richtung der zweiten Hydraulikpumpe 26.

Der Niederdruckanschluss 27 der zweiten Hydraulikpumpe 26 ist fluidleitend über die Hydraulikleitung 29 mit dem Ausgleichsbehälter 30 verbunden. Abweichend zu der Ausführungsform nach Figur 3 ist der Hochdruckanschluss 28 der zweiten Hydraulikpumpe 26 jedoch nicht unmittelbar fluidleitend mit dem ersten Flüssigkeitsanschluss 6 des 3-Flächenzylinders 42 verbunden, sondern mittelbar über den durch das geöffnete 2/2-Wegeventil 39.1 und die in Strömungsrichtung 23.1 aktivierte erste Hydraulikpumpe 19 freigegebenen Strömungsweg.

Der zur Umgebung hin offene Ausgleichsbehälter 30 nimmt Hydraulikflüssigkeit 7 auf und ist fluidleitend über eine Hydraulikleitung 32 mit dem ersten Flüssigkeitsanschluss 6 des 3-Flächenzylinders 42 verbunden. In der Hydraulikleitung 32 ist ein 2/2-Wegeventil 33.1 angeordnet.

Beim Ausfahren des Linear-Antriebssystems 1 im Eilgang nach Figur 4A wird die zweite hydraulisch wirksame Fläche 13 über den zweiten Flüssigkeitsanschluss 15 mittels der in Strömungsrichtung 23.1 arbeitenden ersten Hydraulikpumpe 19 mit Hydraulikflüssigkeit 7 beaufschlagt, wodurch sich der ringförmige Kolben 47 mit der Kolbenstange 46 in Ausfahrrichtung 8 bewegt.

Die Hydraulikflüssigkeit 7 gelangt durch das geöffnete 2/2-Wegeventil 33.1 aus dem Ausgleichsbehälter 30 über den ersten Flüssigkeitsanschluss 6 in den Zylinderraum 5 des 3-Flächenzylinders 42 (Nachsaugung). Eine Beaufschlagung der ersten hydraulisch wirksamen Fläche 4 erfolgt nicht, weil das 2/2-Wegeventil 39.1 in der Hydraulikleitung 38 geschlossen ist.

Beim Einfahren des Linear-Antriebssystems 1 nach Figur 4D im Eilgang wird die dritte hydraulisch wirksame Fläche 14 über den dritten Flüssigkeitsanschluss 16 mittels der nun in entgegengesetzter Strömungsrichtung 23.2 arbeitenden ersten Hydraulikpumpe 19 mit Hydraulikflüssigkeit 7 beaufschlagt, wodurch sich der ringförmige Kolben 47 zusammen mit der Kolbenstange 46 in Einfahrrichtung 17 bewegt. Die Hydraulikflüssigkeit 7 wird durch das geöffnete 2/2-Wegeventil 33.1 aus dem Zylinderraum 5 des einfach wirkenden Zylinders 2 in den Ausgleichsbehälter 30 verdrängt. Das 2/2-Wegeventil 39.1 in der Hydraulikleitung 38 ist geschlossen.

Beim Ausfahren des Linear-Antriebssystems 1 im Kraftgang nach Figur 4B wird die erste hydraulisch wirksame Fläche 4 über den ersten Flüssigkeitsanschluss 6 mit Hydraulikflüssigkeit 7 beaufschlagt, wodurch sich der 3-Flächenzylinder 42 in Ausfahrrichtung 8 bewegt. Das 2/2-Wegeventil 39.1 in der Hydraulikleitung 38 ist nun geöffnet. Sowohl die erste Hydraulikpumpe 19 als auch die zweite Hydraulikpumpe 26 sind aktiviert und fördern die Hydraulikflüssigkeit 7 in übereinstimmender Strömungsrichtung 23.1 in Richtung des ersten Flüssigkeitsanschlusses 6. Die aktivierte zweite Hydraulikpumpe 26 stellt das erforderliche zusätzliche Volumen an Hydraulikflüssigkeit 7 aus dem Ausgleichsbehälter 30 bereit, um über den ersten Flüssigkeitsanschluss 6 die erste hydraulisch wirksame Fläche 4 des 3-Flächenzylinders 42 und über den zweiten Flüssigkeitsanschluss 15 außerdem die zweite hydraulisch wirksame Fläche 13 mit Hydraulikflüssigkeit 7 zu beaufschlagen. Eine Strömung der Hydraulikflüssigkeit 7 über die Hydraulikleitung 32 in den Ausgleichsbehälter 30 wird durch das geschlossene 2/2-Wegeventil 33.1 verhindert.

Zum Beenden des Kraftgangs werden entsprechend Figur 4C die erste Hydraulikpumpe 19 und die zweite Hydraulikpumpe 26 deaktiviert, das 2/2-Wegeventil 33.1 geöffnet und das 2/2-Wegeventil 39.1 in der Hydraulikleitung 38 geschlossen, so dass die Hydraulikflüssigkeit 7 von dem ersten Zylinderraum 5 über das geöffnete 2/2 Wegeventil 33.1 in der Hydraulikleitung 32 in den Ausgleichsbehälter 30 strömt.

### Bezugszeichenliste

- 1: Linear-Antriebssystem
- 2: einfach wirkender Zylinder
- 3: Kolbenstange einfach wirkender Zylinder
- 4: erste hydraulisch wirksame Fläche
- 5: erster Zylinderraum
- 6: erster Flüssigkeitsanschluss
- 7: Hydraulikflüssigkeit
- 8: Ausfahrrichtung
- 9: Gleichgangzylinder
- 10: Kolben
- 11: Kolbenstange Gleichgangzylinder
- 12: Kolbenstange Gleichgangzylinder
- 13: zweite hydraulisch wirksamen Fläche
- 14: dritte hydraulisch wirksamen Fläche
- 15: zweiter Flüssigkeitsanschluss
- 16: dritter Flüssigkeitsanschluss
- 17: Einfahrrichtung
- 18: geschlossener hydraulischer Kreislauf
- 19: erste Hydraulikpumpe
- 20: Elektromotor
- 21: erster Druckanschluss
- 22: zweiter Druckanschluss
- 23.1: Strömungsrichtung
- 23.2: entgegengesetzte Strömungsrichtung
- 24: Hydraulikleitung
- 25: Hydraulikleitung
- 26: zweite Hydraulikpumpe
- 27: Niederdruckanschluss
- 28: Hochdruckanschluss
- 29: Hydraulikleitung
- 30: Ausgleichsbehälter
- 31: Hydraulikleitung
- 32: Hydraulikleitung
- 33: erstes Absperrorgan
- 33.1: 2/2-Wegeventil
- 34: Koppelglied
- 35: zweiter Zylinderraum
- 36: dritter Zylinderraum
- 37 38: Hydraulikleitung
- 39: zweites Absperrorgan
- 39.1: 2/2-Wegeventil
- 40: Rückschlagventil
- 41: Hydraulikleitung
- 42: 3-Flächenzylinder
- 43: Zylinderrohr
- 44: Zylinderboden
- 45: Kolbenstangenführung
- 46: Kolbenstange
- 47: ringförmiger Kolben
- 47.1: erste Kolbenfläche
- 47.2: zweite Kolbenfläche
- 48: Führungszapfen
- 49: Hohlraum
- 50: Teiloberfläche
- 51: zweiter Zylinderraum
- 52: Fluidkanal

## Patentansprüche

1. Hydrostatisches Linear-Antriebssystem (1) umfassend
- einen einfach wirkenden Zylinder (2) mit einer ersten hydraulisch wirksamen Fläche (4) und einem ersten Flüssigkeitsanschluss (6), über den die erste hydraulisch wirksame Fläche (4) in einer Ausfahrrichtung (8) des Zylinders mit einer Hydraulikflüssigkeit (7) beaufschlagbar ist,
- einen Gleichgangzylinder (9) mit einer zweiten und einer dritten, in der Größe übereinstimmenden hydraulisch wirksamen Fläche (13 14) sowie einem zweiten und dritten Flüssigkeitsanschluss (15, 16), wobei die zweite hydraulisch wirksame Fläche (13) über den zweiten Flüssigkeitsanschluss (15) in der Ausfahrrichtung (8) und die dritte hydraulisch wirksame Fläche (14) über den dritten Flüssigkeitsanschluss (16) mit der Hydraulikflüssigkeit (7) in einer der Ausfahrrichtung (8) entgegengesetzten Einfahrrichtung (17) beaufschlagbar ist,
- wobei die erste hydraulisch wirksame Fläche (4) des einfach wirkenden Zylinders (2) größer als die hydraulische wirksame zweite bzw. dritte hydraulisch wirksame Fläche (13, 14) des Gleichgangzylinders (9) ist,
- eine erste Hydraulikpumpe (19) mit einem ersten und einem zweiten Druckanschluss (21, 22) zur Bereitstellung eines Volumenstroms der Hydraulikflüssigkeit (7), wobei die Strömungsrichtung (23.1, 23.2) des Volumenstroms zwischen den Druckanschlüssen (21, 22) umkehrbar ist,
- einen unter einem Vorspannungsdruck stehenden, geschlossenen hydraulischen Kreislauf (18) umfassend den Gleichgangzylinder (9) und die erste Hydraulikpumpe (19), wobei der erste Druckanschluss (21) mit dem zweiten Flüssigkeitsanschluss (15) und der zweite Druckanschluss (22) mit dem dritten Flüssigkeitsanschluss (16) jeweils fluidleitend verbunden sind,
- einen zur Umgebung offen Ausgleichsbehälter (30) für die Hydraulikflüssigkeit (7), der fluidleitend mit dem ersten Flüssigkeitsanschluss (6) des einfach wirkenden Zylinders (2) verbunden ist,
- ein erstes Absperrorgan (33) in der fluidleitenden Verbindung zwischen dem Ausgleichsbehälter (30) und dem einfach wirkenden Zylinder (2), wobei das erste Absperrorgan (33) einen Durchfluss der Hydraulikflüssigkeit in beiden Richtungen erlaubt,
- eine zweite Hydraulikpumpe (26) mit einem Niederdruckanschluss (27) und einem Hochdruckanschluss (28) eingerichet zur zeitweiligen Bereitstellung eines Volumenstroms der Hydraulikflüssigkeit (7), wobei der Niederdruckanschluss (27) fluidleitend mit dem Ausgleichsbehälter (30) und der Hochdruckanschluss (28) fluidleitend mit dem ersten Flüssigkeitsanschluss (6) des einfach wirkenden Zylinders (2) verbunden ist sowie
- eine mechanische Kopplung zwischen dem einfach wirkenden Zylinder (2) und dem Gleichgangzylinder (9) .

2. Hydrostatisches Linear-Antriebssystem (1) umfassend
- einen Zylinder mit einem Zylinderrohr (43), einen das Zylinderrohr (43) an einer Stirnseite abschließenden Zylinderboden (44) sowie eine an der gegenüberliegenden Stirnseite angeordnete Kolbenstangenführung (45),
- einen sich von dem Zylinderboden (44) in das Zylinderrohr (43) hinein erstreckenden Führungszapfen (48), einen den Führungszapfen (48) umgebenden, ringförmigen Kolben (47) sowie eine Kolbenstange (46) mit einem Hohlraum (49), der den Führungszapfen (48) umgibt,
- eine erste hydraulisch wirksame Fläche (4), die von der dem Zylinderboden (44) zugewandten ringförmigen ersten Kolbenfläche (47.1) gebildet wird und einen ersten Zylinderraum (5) zwischen dem ringförmigen Kolben (47) und dem Zylinderboden (44) stirnseitig begrenzt,
- eine zweite hydraulisch wirksame Fläche (13), die von einer Teiloberfläche (50) des Hohlraums (49) in der Kolbenstange (46) gebildet wird, die der Stirnseite des Führungszapfens (48) gegenüberliegt,
- eine dritte hydraulisch wirksame Fläche (14), die von der der Kolbenstangenführung (45) zugewandten ringförmigen zweiten Kolbenfläche (47.2) gebildet wird und einen zweiten Zylinderraum (51) zwischen dem ringförmigen Kolben (47) und der Kolbenstangenführung (45) stirnseitig begrenzt, wobei die zweite und dritte hydraulisch wirksame Fläche (13, 14) in der Größe übereinstimmen,
- einen ersten Flüssigkeitsanschluss (6), über den die erste hydraulisch wirksame Fläche (4) in einer Ausfahrrichtung (8) des Zylinders mit einer Hydraulikflüssigkeit (7) beaufschlagbar ist,
- einen zweiten und dritten Flüssigkeitsanschluss (15, 16), wobei die zweite hydraulisch wirksame Fläche (13) über den zweiten Flüssigkeitsanschluss (15) in der Ausfahrrichtung (8) und die dritte hydraulisch wirksame Fläche (14) über den dritten Flüssigkeitsanschluss (16) mit der Hydraulikflüssigkeit (7) in einer der Ausfahrrichtung (8) entgegengesetzten Einfahrrichtung (17) beaufschlagbar ist,
- wobei die erste hydraulisch wirksame Fläche (4) größer als die zweite bzw. dritte hydraulische wirksame Fläche (13, 14) ist,
- eine erste Hydraulikpumpe (19) mit einem ersten und einem zweiten Druckanschluss (21, 22) zur Bereitstellung eines Volumenstroms der Hydraulikflüssigkeit (7), wobei die Strömungsrichtung (23.1, 23.2) des Volumenstroms zwischen den Druckanschlüssen (21, 22) umkehrbar ist,
- einen unter einem Vorspannungsdruck stehenden, geschlossenen hydraulischen Kreislauf (18) umfassend die erste Hydraulikpumpe (19), wobei der erste Druckanschluss(21) mit dem zweiten Flüssigkeitsanschluss (15) und der zweite Druckanschluss (22) mit dem dritten Flüssigkeitsanschluss (16) jeweils fluidleitend verbunden sind,
- einen zur Umgebung offen Ausgleichsbehälter (30) für die Hydraulikflüssigkeit (7), der fluidleitend mit dem ersten Flüssigkeitsanschluss (6) verbunden ist,
- ein erstes Absperrorgan (33.1) in der fluidleitenden Verbindung zwischen dem Ausgleichsbehälter (30) und dem ersten Flüssigkeitsanschluss (6) des Zylinders, wobei das erste Absperrorgan (33.1) einen Durchfluss der Hydraulikflüssigkeit in beiden Richtungen erlaubt, sowie
- eine zweite Hydraulikpumpe (26) mit einem Niederdruckanschluss (27) und einem Hochdruckanschluss (28) eingerichet zur zeitweiligen Bereitstellung eines Volumenstroms der Hydraulikflüssigkeit (7), wobei der Niederdruckanschluss (27) fluidleitend mit dem Ausgleichsbehälter (30) und der Hochdruckanschluss (28) fluidleitend mit dem ersten Flüssigkeitsanschluss (6) des Zylinders verbunden ist.

3. Hydrostatisches Linear-Antriebssystem (1) nach Anspruch 1 oder 2, **dadurch gekennzeichnet, dass**
- der Hochdruckanschluss (28) der zweiten Hydraulikpumpe (26) fluidleitend mit dem zweiten Druckanschluss (22) der ersten Hydraulikpumpe (19) verbunden ist,
- ein Rückschlagventil (40) in der fluidleitenden Verbindung zwischen der ersten und zweiten Hydraulikpumpe (19, 26) derart angeordnet ist, dass ein Rückfluss der Hydraulikflüssigkeit (7) in Richtung der zweiten Hydraulikpumpe (26) gesperrt ist und
- eine fluidleitende Verbindung (38) zwischen dem ersten Druckanschluss (21) und dem ersten Flüssigkeitsanschluss (6) sowie ein zweites Absperrorgan (39) in dieser fluidleitenden Verbindung.

4. Hydrostatisches Linear-Antriebssystem (1) nach einem der Ansprüche 1 bis 3, **dadurch gekennzeichnet, dass** das Verdrängungsvolumen und/oder die Antriebsdrehzahl der ersten und/oder zweiten Hydraulikpumpe (19, 26) veränderlich sind.

5. Hydrostatisches Linear-Antriebssystem (1) nach einem der Ansprüche 1 bis 4, **dadurch gekennzeichnet, dass** die Druckanschlüsse(21, 22) der ersten und/oder der Hochdruckanschluss (28) der zweiten Hydraulikpumpe (19, 26) mit einem Druckspeicher verbunden sind.

6. Hydrostatisches Linear-Antriebssystem (1) nach einem der Ansprüche 1 bis 5, **dadurch gekennzeichnet, dass** das erste und/oder zweite Absperrorgan (33, 39) als Sperrventil ausgestalt ist.

7. Hydrostatisches Linear-Antriebssystem (1) nach einem der Ansprüche 1 bis 6, **dadurch gekennzeichnet, dass** der Vorspannungsdruck höher als der Umgebungsdruck ist.

8. Hydrostatisches Linear-Antriebssystem nach Anspruch 7, **dadurch gekennzeichnet, dass** der Vorspannungsdruck zwischen 5 - 50 bar beträgt.

9. Hydrostatisches Linear-Antriebssystem (1) nach Ansprüchen 1 bis 8, **dadurch gekennzeichnet, dass** in der fluidleitenden Verbindung zwischen dem Ausgleichsbehälter (30) und dem ersten Flüssigkeitsanschluss (6) eine Drossel angeordnet ist.

10. Hydrostatisches Linear-Antriebssystem (1) nach Anspruch 1, **dadurch gekennzeichnet, dass** der einfach wirkende Zylinder (2) ein Plungerzylinder ist.

11. Hydrostatisches Linear-Antriebssystem (1) nach einem der Ansprüche 1 bis 10, **gekennzeichnet durch** eine Steuerung für jedes Sperrorgan (33, 39) und jede Hydraulikpumpe (19, 26), die derart eingerichet ist, dass das Linear-Antriebssystem (1) in einem Eilgang in einer Ausfahr- und Einfahrrichtung (8, 17) und in einem Kraftgang in einer Ausfahrrichtung (8) betreibbar ist.

## Claims

1. Hydrostatic linear drive system (1) comprising
- a single-action cylinder (2) with a first hydraulically active surface (4) and a first liquid connector (6), via which the first hydraulically active surface (4) can be loaded with a hydraulic liquid (7) in an extension direction (8) of the cylinder,
- a synchronous cylinder (9) with a second and a third hydraulically active surface (13, 14) of matching size, and with a second and third liquid connector (15, 16), it being possible for the second hydraulically active surface (13) to be loaded via the second liquid connector (15) in the extension direction (8) and for the third hydraulically active surface (14) to be loaded via the third liquid connector (16) with the hydraulic liquid (7) in a retraction direction (17) which is opposed to the extension direction (8),
- the first hydraulically active surface (4) of the single-action cylinder (2) being greater than the hydraulically active second or third hydraulically active surface (13, 14) of the synchronous cylinder (9),
- a first hydraulic pump (19) with a first and a second pressure connector (21, 22) for providing a volumetric flow of the hydraulic liquid (7), the flow direction (23.1, 23.2) of the volumetric flow between the pressure connectors (21, 22) being reversible,
- a closed hydraulic circuit (18) which is under preload pressure and comprises the synchronous cylinder (9) and the first hydraulic pump (19), the first pressure connector (21) being connected to the second liquid connector (15), and the second pressure connector (22) being connected to the third liquid connector (16), in each case in a fluid-conducting manner,
- an equalizing container (30) for the hydraulic liquid (7), which equalizing container (30) is open to the surroundings and is connected in a fluid-conducting manner to the first liquid connector (6) of the single-action cylinder (2),
- a first shut-off member (33) in the fluid-conducting connection between the equalizing container (30) and the single-action cylinder (2), the first shut-off member (33) permitting a throughflow of the hydraulic liquid in both directions,
- a second hydraulic pump (26) with a low pressure connector (27) and a high pressure connector (28) configured for the temporary provision of a volumetric flow of the hydraulic liquid (7), the low pressure connector (27) being connected in a fluid-conducting manner to the equalizing container (30), and the high pressure connector (28) being connected in a fluid-conducting manner to the first liquid connector (6) of the single-action cylinder (2), and
- a mechanical coupling between the single-action cylinder (2) and the synchronous cylinder (9).

2. Hydrostatic linear drive system (1) comprising
- a cylinder with a cylinder tube (43), a cylinder bottom (44) which closes off the cylinder tube (43) on one end side, and a piston rod guide (45) which is arranged on the opposite end side,
- a guide pin (48) which extends from the cylinder bottom (44) into the cylinder tube (43), an annular piston (47) which surrounds the guide pin (48), and a piston rod (46) with a cavity (49) which surrounds the guide pin (48),
- a first hydraulically active surface (4) which is formed by the annular first piston surface (47.1) which faces the cylinder bottom (44) and delimits a first cylinder space (5) on the end side between the annular piston (47) and the cylinder bottom (44),
- a second hydraulically active surface (13) which is formed by a part surface (50) of the cavity (49) in the piston rod (46) which lies opposite the end side of the guide pin (48),
- a third hydraulically active surface (14) which is formed by the second annular piston surface (47.2), facing the piston rod guide (45), and delimits a second cylinder space (51) on the end side between the annular piston (47) and the piston rod guide (45), the second and third hydraulically active surface (13, 14) being of matching size,
- a first liquid connector (6), via which the first hydraulically active surface (4) can be loaded with a hydraulic liquid (7) in an extension direction (8) of the cylinder,
- a second and third liquid connector (15, 16), it being possible for the second hydraulically active surface (13) to be loaded via the second liquid connector (15) in the extension direction (8), and for the third hydraulically active surface (14) to be loaded via the third liquid connector (16) with the hydraulic liquid (7) in a retraction direction (17) which is opposed to the extension direction (8),
- the first hydraulically active surface (4) being greater than the second or third hydraulic active surface (13, 14),
- a first hydraulic pump (19) with a first and a second pressure connector (21, 22) for providing a volumetric flow of the hydraulic liquid (7), it being possible for the flow direction (23.1, 23.2) of the volumetric flow between the pressure connectors (21, 22) to be reversed,
- a closed hydraulic circuit (18) which is under preload pressure and comprises the first hydraulic pump (19), the first pressure connector (21) being connected to the second liquid connector (15) and the second pressure connector (22) being connected to the third liquid connector (16), in each case in a fluid-conducting manner,
- an equalizing container (30) for the hydraulic liquid (7) which is open to the surroundings and is connected in a fluid-conducting manner to the first liquid connector (6),
- a first shut-off member (33.1) in the fluid-conducting connection between the equalizing container (30) and the first liquid connector (6) of the cylinder, the first shut-off member (33.1) permitting a throughflow of the hydraulic liquid in both directions,
and
- a second hydraulic pump (26) with a low pressure connector (27) and a high pressure connector (28) configured for the temporary provision of a volumetric flow of the hydraulic liquid (7), the low pressure connector (27) being connected in a fluid-conducting manner to the equalizing container (30), and the high pressure connector (28) being connected in a fluid-conducting manner to the first liquid connector (6) of the cylinder.

3. Hydrostatic linear drive system (1) according to Claim 1 or 2, **characterized in that**
- the high pressure connector (28) of the second hydraulic pump (26) is connected in a fluid-conducting manner to the second pressure connector (22) of the first hydraulic pump (19),
- a check valve (40) is arranged in the fluid-conducting connection between the first and second hydraulic pump (19, 26) in such a way that a return flow of the hydraulic liquid (7) in the direction of the second hydraulic pump (26) is shut off, and
- a fluid-conducting connection (38) between the first pressure connector (21) and the first liquid connector (6), and a second shut-off member (39) in this fluid-conducting connection.

4. Hydrostatic linear drive system (1) according to one of Claims 1 to 3, **characterized in that** the displacement volume and/or the drive rotational speed of the first and/or second hydraulic pump (19, 26) are/is variable.

5. Hydrostatic linear drive system (1) according to one of Claims 1 to 4, **characterized in that** the pressure connectors (21, 22) of the first hydraulic pump (19) and/or the high pressure connector (28) of the second hydraulic pump (26) are/is connected to a pressure accumulator.

6. Hydrostatic linear drive system (1) according to one of Claims 1 to 5, **characterized in that** the first and/or second shut-off member (33, 39) are/is configured as a shut-off valve.

7. Hydrostatic linear drive system (1) according to one of Claims 1 to 6, **characterized in that** the preload pressure is higher than the ambient pressure.

8. Hydrostatic linear drive system according to Claim 7, **characterized in that** the preload pressure is between 5 and 50 bar.

9. Hydrostatic linear drive system (1) according to Claims 1 to 8, **characterized in that** a throttle is arranged in the fluid-conducting connection between the equalizing container (30) and the first liquid connector (6) .

10. Hydrostatic linear drive system (1) according to Claim 1, **characterized in that** the single-action cylinder (2) is a plunger cylinder.

11. Hydrostatic linear drive system (1) according to one of Claims 1 to 10, **characterized by** a controller for each shut-off member (33, 39) and each hydraulic pump (19, 26), which controller is configured such that the linear drive system (1) can be operated in a rapid mode in an extension and retraction direction (8, 17) and in a power mode in an extension direction (8).

## Revendications

1. Système d'entraînement linéaire hydrostatique (1) comprenant
- un cylindre à simple effet (2) comportant une première surface hydrauliquement active (4) et un premier raccord de liquide (6), par le biais duquel la première surface hydrauliquement active (4) peut être soumise à un liquide hydraulique (7) dans un sens de déploiement (8) du cylindre,
- un cylindre synchrone (9) comportant une deuxième et une troisième surface hydrauliquement active (13, 14) de même dimension et un deuxième et un troisième raccord de liquide (15, 16), la deuxième surface hydrauliquement active (13) pouvant être soumise au liquide hydraulique (7) par le biais du deuxième raccord de liquide (15) dans le sens de déploiement (8) et la troisième surface hydrauliquement active (14) pouvant être soumise au liquide hydraulique (7) par le biais du troisième raccord de liquide (16) dans un sens de rétraction (17) opposé au sens de déploiement (8),
- la première surface hydrauliquement active (4) du cylindre à simple effet (2) étant supérieure à la deuxième ou troisième surface hydrauliquement active (13, 14) du cylindre synchrone (9),
- une première pompe hydraulique (19) comportant un premier et un deuxième raccord de pression (21, 22) destiné à fournir le liquide hydraulique (7), le sens d'écoulement (23.1, 23.2) du flux volumique entre les raccords de pression (21, 22) étant réversible,
- un circuit hydraulique fermé (18) placé sous pression de précontrainte et comportant le cylindre synchrone (9) et la première pompe hydraulique (19), le premier raccord de pression (21) étant relié fluidiquement au deuxième raccord de liquide (15) et le deuxième raccord de pression (22) étant relié fluidiquement au troisième raccord de liquide (16),
- un réservoir de compensation (30) ouvert sur l'environnement, destiné au liquide hydraulique (7) et relié fluidiquement au premier raccord de liquide (6) du cylindre à simple effet (2),
- un premier élément d'arrêt (33) dans la liaison fluidique entre le réservoir de compensation (30) et le cylindre à simple effet (2), le premier élément d'arrêt (33) permettant l'écoulement du liquide hydraulique dans les deux sens,
- une deuxième pompe hydraulique (26) comportant un raccord à basse pression (27) et un raccord à haute pression (28) et conçue pour fournir temporairement un flux volumique du liquide hydraulique (7), le raccord à basse pression (27) étant relié fluidiquement au réservoir de compensation (30) et le raccord à haute pression (28) étant relié fluidiquement au premier raccord de liquide (6) du cylindre à simple effet (2), ainsi que
- un accouplement mécanique entre le cylindre à simple effet (2) et le cylindre synchrone (9).

2. Système d'entraînement linéaire hydrostatique (1) comprenant
- un cylindre comportant un tube cylindrique (43), un fond de cylindre (44) qui ferme le tube cylindrique (43) au niveau d'une face frontale et un guide de tige de piston (45) disposé au niveau de la face frontale opposée,
- une tige de guidage (48) s'étendant depuis le fond de cylindre (44) jusque dans le tube de cylindre (43), un piston annulaire (47) entourant la tige de guidage (48) et une tige de piston (46) comportant une cavité (49) qui entoure la tige de guidage (48),
- une première surface hydrauliquement active (4) qui est formée par la première surface de piston annulaire (47.1) dirigée vers le fond de cylindre (44) et qui délimite du côté frontal un premier espace de cylindre (5) entre le piston annulaire (47) et le fond de cylindre (44),
- une deuxième surface hydrauliquement active (13) qui est formée par une partie de surface (50) de la cavité (49) dans la tige de piston (46) et qui est opposée à la face frontale de la tige de guidage (48),
- une troisième surface hydrauliquement active (14) qui est formée par la deuxième surface de piston annulaire (47.2) dirigée vers le guide de tige de piston (45) et qui délimite du côté frontal un deuxième espace de cylindre (51) entre le piston annulaire (47) et le guide de tige de piston (45), les deuxième et troisième surfaces hydrauliquement actives (13, 14) étant de même dimension,
- un premier raccord de liquide (6) par le biais duquel la première surface hydrauliquement active (4) peut être soumise à un liquide hydraulique (7) dans un sens de déploiement(8) du cylindre,
- un deuxième et un troisième raccord de liquide (15, 16), la deuxième surface hydrauliquement active (13) pouvant être soumise au liquide hydraulique (7) par le biais du deuxième raccord de liquide (15) dans le sens de déploiement (8) et la troisième surface hydrauliquement active (14) pouvant être soumise au liquide hydraulique (7) dans un sens de rétraction (17) opposé au sens de déploiement (8) par le biais du troisième raccord de liquide (16),
- la première surface hydrauliquement active (4) étant supérieure à la deuxième ou troisième surface hydrauliquement active (13, 14),
- une première pompe hydraulique (19) comportant un premier et un deuxième raccord de pression (21, 22) et destinée à fournir un flux volumique du liquide hydraulique (7), le sens d'écoulement (23.1, 23.2) du flux volumique entre les raccords de pression (21, 22) étant réversible,
- un circuit hydraulique fermé (18) placé sous pression de précontrainte et comprenant la première pompe hydraulique (19), le premier raccord de pression (21) étant relié fluidiquement au deuxième raccord de liquide (15) et le deuxième raccord de pression (22) étant relié fluidiquement au troisième raccord de liquide (16),
- un récipient de compensation (30) ouvert sur l'environnement, destiné au liquide hydraulique (7) et relié fluidiquement au premier raccord de liquide (6),
- un premier élément d'arrêt (33.1) dans le raccord de liquide entre le récipient de compensation (30) et le premier raccord de liquide (6) du cylindre, le premier élément d'arrêt (33.1) permettant l'écoulement du liquide hydraulique dans les deux sens, ainsi que
- une deuxième pompe hydraulique (26) comportant un raccord à basse pression (27) et un raccord à haute pression (28) et conçue pour fournir temporairement un flux volumique du liquide hydraulique (7), le raccord à basse pression (27) étant relié fluidiquement au réservoir de compensation (30) et le raccord à haute pression (28) étant relié fluidiquement au premier raccord de liquide (6) du cylindre à simple effet (2).

3. Système d'entraînement linéaire hydrostatique (1) selon la revendication 1 ou 2, **caractérisé en ce que**
- le raccord à haute pression (28) de la deuxième pompe hydraulique (26) est relié fluidiquement au deuxième raccord de pression (22) de la première pompe hydraulique (19),
- une soupape anti-retour (40) est disposée dans la liaison fluidique entre la première et la deuxième pompe hydraulique (19, 26) de telle sorte qu'un reflux du liquide hydraulique (7) en direction de la deuxième pompe hydraulique (26) est bloqué et
- une liaison fluidique (38) entre le premier raccord de pression (21) et le premier raccord de liquide (6) et un deuxième élément d'arrêt (39) dans cette liaison fluidique.

4. Système d'entraînement linéaire hydrostatique (1) selon l'une des revendications 1 à 3, **caractérisé en ce que** le volume de déplacement et/ou la vitesse de rotation d'entraînement de la première et/ou de la deuxième pompe hydraulique (19, 26) sont variables.

5. Système d'entraînement linéaire hydrostatique (1) selon l'une des revendications 1 à 4, **caractérisé en ce que** les raccords de pression (21, 22) et/ou le raccord à haute pression (28) respectivement des première et deuxième pompes hydrauliques (19, 26) sont reliés à un accumulateur de pression.

6. Système d'entraînement linéaire hydrostatique (1) selon l'une des revendications 1 à 5, **caractérisé en ce que** le premier et/ou le deuxième élément d'arrêt (33, 39) sont conçus comme une soupape anti-retour.

7. Système d'entraînement linéaire hydrostatique (1) selon l'une des revendications 1 à 6, **caractérisé en ce que** la pression de précontrainte est supérieure à la pression ambiante.

8. Système d'entraînement linéaire hydrostatique selon la revendication 7, **caractérisé en ce que** la pression de précontrainte est comprise entre 5 et 50 bars.

9. Système d'entraînement linéaire hydrostatique (1) selon les revendications 1 à 8, **caractérisé en ce qu'**un étranglement est disposé dans la liaison fluidique entre le récipient de compensation (30) et le premier raccord de liquide (6).

10. Système d'entraînement linéaire hydrostatique (1) selon la revendication 1, **caractérisé en ce que** le cylindre à simple effet (2) est un cylindre plongeur.

11. Système d'entraînement linéaire hydrostatique (1) selon l'une des revendications 1 à 10, **caractérisé par** une commande pour chaque élément d'arrêt (33, 39) et chaque pompe hydraulique (19, 26), qui est conçue de manière à ce que le système d'entraînement linéaire (1) puisse fonctionner en déplacement rapide dans un sens de déploiement et de rétraction (8, 17) et en force dans un sens de déploiement (8).
